**Europäisches Patentamt**

(19) **European Patent Office**

**Office européen des brevets**

(11) Numéro de publication: **0 051 018**
**B1**

(12) # FASCICULE DE BREVET EUROPEEN

(45) Date de publication du fascicule du brevet:
**03.07.85**

(51) Int. Cl.⁴: **G 01 V 3/30, H 01 Q 1/38**

(21) Numéro de dépôt: **81401636.6**

(22) Date de dépôt: **16.10.81**

(54) **Procédé et dispositif de diagraphie électromagnétique dans les forages.**

(30) Priorité: **17.10.80 FR 8022327**

(43) Date de publication de la demande:
**05.05.82 Bulletin 82/18**

(45) Mention de la délivrance du brevet:
**03.07.85 Bulletin 85/27**

(84) Etats contractants désignés:
**DE GB IT NL**

(56) Documents cités:
**FR - A - 2 203 182**
**US - A - 3 629 937**
**US - A - 4 185 238**
**US - A - 4 204 212**

**IEEE TRANSACTIONS ON ANTENNAS AND PROPAGATION, vol. AP-27, no. 6, Novembre 1979, pages 850-853, New York, US, A.D. KRALL et al.: "The omni microstrip antenna: A new small antenna"**

(73) Titulaire: **Schlumberger Limited, 277 Park Avenue, New York, N.Y. 10172 (US)**
(84) Etats contractants désignés: **DE GB NL**

(73) Titulaire: **SOCIETE DE PROSPECTION ELECTRIQUE SCHLUMBERGER, 42, rue Saint-Dominique, F-75340 Paris Cedex 07 (FR)**
(84) Etats contractants désignés: **IT**

(72) Inventeur: **Thoraval, Yvon, 7, Square des Peupliers, F-92350 Le Plessis Robinson (FR)**

(74) Mandataire: **Monod, Jean-Yves et al, Cabinet Netter 40, rue Vignon, F-75009 Paris (FR)**

## Description

La présente invention est relative à l'investigation des milieux souterrains à l'aide d'ondes électromagnétiques.

On connaît depuis longtemps des techniques d'investigation d'un milieu souterrain traversé par un trou de forage dans lesquelles on fait circuler une sonde dans ce trou et on relève, en fonction de la profondeur de cette sonde, certaines caractéristiques physiques de son milieu environnant pour obtenir des diagraphies (logs) d'où il est possible de tirer des indications utiles à la conduite de l'exploration et/ou de l'exploitation de matières minérales à partir des formations intéressées par ce forage (voir p. ex. le document US-A-3 629 937 qui correspond au préambule de la revendication 1).

De telles mesures font appel à des techniques de stimulation diverses parmi lesquelles figure notamment l'émission d'ondes électromagnétiques en vue de déterminer certains paramètres liés au comportement de ces ondes électromagnétiques dans le milieu concerné.

A cette dernière catégorie appartiennent les mesures de conductivité électrique des formations traversées par un trou de forage par induction électromagnétique. Des formes de réalisation de procédés et d'outils de diagraphie par induction sont, par exemple, décrites dans US-A 2 582 314 déposé par H.C. DOLL. Une bobine émettrice montée sur une sonde est excitée par un oscillateur à une fréquence de l'ordre de 20 kHz, par exemple, pour induire des courants dans la formation géologique environnante. L'importance de ces courants dépend de la conductivité des formations dans lesquelles ils prennent naissance. Ils circulent selon des lignes sensiblement circulaires centrées sur l'axe du trou de forage et provoquent eux-mêmes l'apparition d'une force électromotrice dans une ou plusieurs bobines réceptrices montées sur la sonde de diagraphie à des distances déterminées de la bobine émettrice. L'analyse de paramètres du signal de sortie de ces bobines réceptrices par rapport au signal émis permet d'obtenir des informations sur la conductivité des formations traversées par ces courants.

Ces mesures de conductivité par induction constituent l'une des techniques de base de l'investigation de formations géologiques traversées par un forage. Elles viennent compléter les méthodes de mesure des résistivités électriques mettant en œuvre des outils à électrodes. Elles sont notamment indispensables lorsque le milieu interne au trou de forage lequel dans les forages d'exploration, est rempli dans le cas général d'une boue destinée à stabiliser sa paroi, est peu conducteur de l'électricité et ne permet pas l'emploi d'outils à électrodes.

Plus récemment, on a proposé des outils de mesure de certaines caractéristiques de milieux environnant un forage qui font intervenir la propagation d'énergie électromagnétique dans ces milieux à des fréquences sensiblement plus élevées que la fréquence utilisée pour réaliser les diagraphies à induction. Dans ces techniques, on emploie des radio-fréquences dans un domaine qui peut s'étendre d'une fréquence basse de 1 mégahertz environ jusqu'à un gigahertz environ.

On sait depuis longtemps que les paramètres caractéristiques de la propagation d'une onde électromagnétique dans un milieu tel que des formations géologiques dépendent à la fois de la conductivité de ces formations et de leur constante diélectrique.

L'atténuation d'une onde électromagnétique se propageant sur une distance D dans un milieu qui tend à dissiper l'énergie électromagnétique varie comme l'expression:

$$e^{-jkd} \qquad (I)$$

dans laquelle e est le symbole de l'exponentielle;
j est l'opérateur des nombres complexes;
D est la distance parcourue par l'énergie; et
k est une constante de propagation définie par la formule:

$$k^2 = -j\,\omega\,\mu o\,(\sigma + j\,\omega\varepsilon) \qquad (II)$$

Dans cette équation:
$\omega$ est la pulsation pour la fréquence f considérée ($\omega = 2\,\pi\,f$);
$\mu o$ est la perméabilité magnétique du milieu considéré;
$\sigma$ est la conductivité du milieu intéressé par la propagation;
$\varepsilon$ est la constante diélectrique ou permitivité électrique de ce milieu.

Si l'on considère un milieu non conducteur dans lequel $\sigma$ égale 0, il résulte de l'expression (II) que la constante k est un terme réel. L'exposant de l'exponentielle de l'expression (I) est alors un terme imaginaire pur qui correspond seulement à un déphasage dans l'expression de l'atténuation des signaux transmis. Autrement dit, la propagation des ondes dans ce milieu s'effectue sans atténuation globale d'énergie, seule subsistant l'atténuation géométrique d'amplitude.

Si la conductivité augmente (boue de forage conductrice par exemple), il arrive un moment où le terme $\sigma$ devient très supérieur au terme $j\,\omega\varepsilon$. La formule (II) montre alors que le terme $k^2$ tend à devenir purement imaginaire. Dans l'expression (I), l'exposant devient alors un terme ayant une composante imaginaire et une composante réelle sensiblement égales entre elles. Lorsque la constante de propagation k continue à croître avec la conductivité, la composante réelle de l'atténuation augmente exponentiellement avec k.

Ainsi, une analyse très sommaire permet de dire qu'en première approximation le déphasage augmente avec la permittivité électrique tandis que l'atténuation d'amplitude croît avec la conductivité.

Afin de mesurer ces paramètres caractéristiques de la propagation d'une onde électromagnétique transmise à une radio-fréquence dans la formation par un émetteur, on utilise en général au moins une paire de récepteurs espacés longitudinalement l'un de l'autre. La distance de l'émetteur au plus rapproché de ces récepteurs longitudinalement dans la direction du trou de forage détermine la profondeur transversale de la formation que l'on peut atteindre pour la mesure. La distance entre les récepteurs détermine l'épaisseur de formation intéressée pour les mesures de caractéristiques de propagation de l'onde émise. Ces caractéristiques sont, notamment, l'atténuation relative des signaux captés par le récepteur le plus rapproché de l'émetteur et par le récepteur le plus éloigné et le déphasage entre les signaux reçus par une telle paire de récepteurs.

L'influence de la conductivité des formations sur l'atténuation et le déphasage devient prépondérante lorsque la fréquence d'investigation s'abaisse. Au contraire, au fur et à mesure que la fréquence augmente vers le domaine des fréquences ultra hautes, c'est l'influence de la constante diélectrique ou permittivité électrique de la zone de formation traversée qui devient prépondérante par rapport à celle de la conductivité.

Pour obtenir des mesures de l'un ou l'autre de ces paramètres caractéristiques de la formation, à savoir sa conductivité électrique et sa permittivité électrique, ou constante diélectrique, on est conduit à effectuer deux mesures simultanées ou consécutives, de la propagation d'ondes électromagnétiques pour chaque zone de formation intéressée, par exemple, une mesure d'atténuation relative et une mesure de phase relative.

Ainsi, on connaît déjà, par US-A-4 052 662 délivré le 4 octobre 1977 au nom de RAU, un outil fonctionnant dans le domaine des fréquences ultra-hautes (microondes) pour déterminer des caractéristiques de propagation d'ondes électromagnétiques dans le milieu entourant immédiatement la paroi d'un trou de forage traversant des formations. Cet outil comporte une sonde équipée de patins destinés à être appliqués contre la paroi du trou dans lequel on la déplace. Sur ce patin sont montées une antenne émettrice et plusieurs antennes réceptrices du type à cavité résonnante. A une fréquence opératoire de 1, 1 gigahertz, on mesure l'atténuation et le déphasage d'ondes captées par les antennes réceptrices pour en tirer la valeur de la constante diélectrique d'une zone de faible épaisseur autour du trou de forage, immédiatement derrière le gâteau de boue (ou mudcake). A des fréquences aussi élevées, la valeur de la constante diélectrique du milieu intéressé a une influence déterminante sur les mesures d'atténuation et de déphasage aux dépens de la conductivité dont l'influence sur les mesures est de plus en plus faible au fur et à mesure que la fréquence s'élève. La combinaison des mesures d'atténuation et de déphasage permet d'éliminer complètement l'influence de ce dernier facteur pour déterminer la constante diélectrique ou permittivité électrique des milieux intéressés.

Lorsqu'on désire obtenir des profondeurs d'investigation plus importantes, on est conduit à espacer l'émetteur et les récepteurs à des distances qui rendent leur montage sur patins difficilement praticable et l'on préfère alors installer les récepteurs et l'émetteur directement sur le mandrin de la sonde de diagraphie.

Sachant que la distance à parcourir par les ondes entre l'émetteur et les récepteurs croît avec la profondeur d'investigation et que l'atténuation d'une onde électromagnétique dans un milieu où elle se propage est une fonction croissante de la fréquence, on est alors amené à utiliser des fréquences de fonctionnement plus basses, par exemple 20 à 30 MHz.

On connaît ainsi des outils de diagraphie électromagnétique pourvus d'émetteur et de récepteurs montés sur un mandrin à des distances qui peuvent être de l'ordre du mètre ou davantage pour obtenir des mesures intéressant des zones situées à une distance radiale supérieure au mètre par rapport à l'axe du forage.

Un tel outil est décrit dans US-A-4 185 238 du 22 janvier 1980 (HUCHITAL et TABANOU). Il comprend: un émetteur à la partie inférieure de son mandrin propre à fonctionner à une fréquence déterminée; une première paire de récepteurs longitudinalement espacés dont le point milieu est à une première distance de l'émetteur pour réaliser une mesure d'atténuation relative des signaux en provenance de l'émetteur à travers le milieu environnant; et une deuxième paire de récepteurs longitudinalement espacés dont le point milieu est à une deuxième distance de l'émetteur, supérieure à la première distance, pour effectuer une mesure de déphasage ou de phase relative entre les signaux qui leur parviennent. Les première et deuxième distances sont sélectionnées de telle façon que les mesures d'atténuation et de déphasage effectuées par les première et deuxième paires de récepteurs respectivement intéressent la même zone de la formation. On a en effet déterminé que les mesures d'atténuation et de phase relatives d'ondes se propageant à travers les formations étaient affectées de manière différente par la distance entre la zone concernée et l'axe du trou. Ainsi, pour obtenir des mesures du déphasage provoqué par la propagation des ondes dans une zone de formation à une distance déterminée du forage, il faut utiliser une paire de récepteurs situés à une distance plus importante de l'émetteur que celle qui le sépare de la paire de récepteurs destinés aux mesures d'atténuation de l'onde dans cette même zone.

D'une façon générale, les transducteurs de rayonnement, émetteurs ou récepteurs, utilisés pour les diagraphies par propagation électromagnétique doivent satisfaire à certaines conditions. En particulier, ils doivent être adaptés à la transmission d'énergie dans des milieux fortement dissipatifs, c'est-à-dire où elle s'accompagne de pertes considérables. En émission, ces transducteurs doivent donc être capables de transmettre au milieu environnant des quantités importantes d'énergie; en réception, ils doivent être au contraire capables de capter des niveaux de signal parfois extrêmement faible. Par ailleurs, ces transducteurs doivent posséder des caractéristiques particulières de directivité. On recherche en général dans les techniques de diagraphie électromagnétique à favoriser la propagation des ondes dans la direction des formations aux dépens de la propagation de ces ondes longitudinalement dans le trou de forage. Il est donc important de prévoir que les transducteurs utilisés à cet effet possèdent des caractéristiques de directivité bien déterminées.

Selon une technique antérieurement proposée en ce qui concerne le choix des transducteurs, par exemple par GB-A-1 088 824, chaque récepteur forme avec l'émetteur les armatures d'un condensateur dont le diélectrique est constitué par le milieu environnant. Pour obtenir une profondeur d'investigation suffisante, on monte ces transducteurs comme des antennes sur le mandrin et la fréquence d'investigation utilisée est située vers le bas de la gamme des radio-fréquences. Cependant, cette technique ne permet pas d'obtenir des résultats satisfaisants, en particulier parce que les antennes sont court-circuitées par le fluide de forage lorsque ce dernier est, comme il est fréquent, un milieu relativement conducteur. Dans ces conditions, il n'est pas possible d'obtenir une transmission efficace d'énergie électromagnétique dans la formation que l'on cherche à étudier.

Selon une autre technique antérieurement proposée (voir par exemple le certificat d'auteur de l'URSS au nom de DAEV N° 177 558), les émetteurs et récepteurs utilisés pour la transmission des ondes électromagnétiques entre l'outil et le milieu environnant sont des bobines toriques dont l'axe est dirigé selon l'axe du mandrin de l'outil de forage.

Dans US-A-3 891 916 du 24 juin 1975 (MEADOR et AL.) et US-A-4 185 238 du 22 janvier 1980 (HUCHITAL et TABANOU), des bobines sont également utilisées pour l'émission et la réception des ondes électromagnétiques. Ces bobines fonctionnent comme des dipôles qui ont une bonne directivité.

L'utilisation de bobines permet de remédier dans une certaine mesure aux défauts signalés à propos des antennes formant des armatures de condensateur. En particulier, ces bobines sont susceptibles de fonctionner dans des fluides de forage légèrement conducteurs. Cependant, on a constaté que cette amélioration avait des limites et que le niveau des signaux qui parviennent aux récepteurs après propagation à travers les formations intéressées est souvent extrêmement faible. Des précautions considérables sont nécessaires pour éviter la détérioration des signaux captés par les récepteurs en vue de leur traitement ultérieur. On est également conduit à prévoir des circuits électroniques de mesure extrêmement sensibles qui rendent la réalisation de l'outil plus difficile et son fonctionnement plus complexe. Il en est particulièrement ainsi pour les circuits associés à une paire de bobines relativement éloignées de l'émetteur tels que, par exemple, dans le mode de réalisation mentionné précédemment en référence au Brevet US-A-4 185 238 (HUCHITAL et TABANOU), les circuits qui sont affectés à la mesure des déphasages correspondant à la zone de formation étudiée.

En outre, on a vu que l'atténuation d'une onde électromagnétique dans un milieu dans lequel elle se propage croît fortement avec la conductivité électrique de ce milieu. Ainsi, avec les outils connus, lorsque la résistivité de la boue de forage devient inférieure à 0,1 ohm par mètre, l'atténuation des ondes dans la boue de forage à l'émission et à la réception est telle qu'il n'est plus possible d'obtenir aux récepteurs des indications exploitables sur la propagation des ondes à travers les formations considérées.

On a essayé d'augmenter la puissance rayonnée par les bobines en augmentant leur diamètre, ce qui présente en outre l'avantage de diminuer l'épaisseur de fluide de forage à traverser par l'énergie électromagnétique sortant de ou parvenant à ces bobines et l'atténuation correspondante. Cependant, l'accroissement consécutif du diamètre externe de l'outil est limité par la dimension des forages dans lesquels l'outil est destiné à être employé et par des considérations d'encombrement.

Dans le domaine des télécommunications aériennes et spatiales, il est connu d'utiliser des antennes constituées par une plaque de diélectrique sur une face de laquelle est imprimé un élément conducteur allongé tandis que son autre face est métallisée pour former un second élément conducteur ou plan de masse. Ces antennes connues sous le nom de lignes biplaques mettent en œuvre des techniques de fabrication de circuits imprimés. Elles présentent l'avantage de pouvoir être conformées relativement aisément à la forme d'engins aériens ou spatiaux dans un volume relativement restreint. Elles se sont révélées bien adaptées à des transmissions de type omnidirectionnel dans l'air ou le vide où la propagation des ondes électromagnétiques s'effectue pratiquement sans perte. Le rendement des antennes de cette nature, qui croît comme le carré de leur fréquence d'utilisation, est acceptable dans l'application aux télécommunications à des fréquences de plusieurs centaines de megahertz. Il n'est pas aussi bon que celui des antennes aériennes classiques qui sont dimensionnées en fonction de la longueur d'onde de propagation des rayonnements qu'elles sont appelées à transmettre dans l'air ou le vide. Cependant, compte tenu de la faible atténuation exercée par le milieu de propagation sur ces rayonnements, la perte de rendement qui accompagne l'emploi des antennes biplaques dans l'application considérée est compensée par leurs avantages, sur le plan de l'encombrement notamment.

Dans ce qui suit, on utilisera les termes «transmission» et «transmettre» en relation avec la propagation d'un rayonnement dans un milieu indifféremment à propos de l'émission et de la réception de ce rayonnement par un transducteur plongé dans ce milieu.

Un des buts de la présente invention est d'améliorer la performance des outils de diagraphie électromagnétique, notamment en permettant d'augmenter la puissance du rayonnement transmis par ces outils aux fins de mesure dans les conditions d'utilisation régnant dans les trous de forage.

L'invention a pour objet d'une part un outil de diagraphie selon la revendication 1 et d'autre part un procédé de diagraphie selon la revendication 10.

Ainsi, on utilise comme transducteur de rayonnement une véritable antenne que l'on peut, de préférence, accorder en fonction de la fréquence du rayonnement à transmettre. A cet effet, selon un mode de réalisation, la liaison électrique entre les deux éléments est un court-circuit et la longueur utile du premier élément est accordée en fonction de la longueur d'onde de propagation de ladite énergie électromagnétique dans le milieu non conducteur.

On a constaté que les antennes qui viennent d'être définies pouvaient être avantageusement adaptées à un emploi dans des outils de diagraphie pour émettre ou recevoir des rayonnements dans l'environnement d'un trou de forage avec des performances sur le plan du rendement très supérieures à celles qui étaient accessibles avec les systèmes rayonnants de l'art antérieur dans ce domaine.

De telles antennes sont réalisées dans la technologie dite des lignes biplaques selon laquelle le premier élément conducteur allongé est imprimé sur une face d'une plaque d'un matériau isolant, tandis que l'autre face est métallisée pour former le second élément conducteur ou plan de masse. Comme indiqué ci-dessus, cette technologie a été utilisée pour former des antennes propres à la transmission omnidirectionnelle de rayonnements électromagnétiques dans des milieux non dissipatifs tels que l'air ou le vide, c'est-à-dire dans lesquels la propagation de ces ondes s'effectue pratiquement sans perte, ce qui est essentiel pour la transmission d'informations.

Or, on s'est aperçu qu'il était possible de faire fonctionner ces antennes avec de bonnes performances dans des milieux très fortement dissipatifs, tels que les milieux concernés par les mesures de diagraphie dans les trous de forage pour effectuer des mesures de la dégradation des signaux électromagnétiques transmis. On a constaté en outre que dans des milieux environnant les trous de forage, et en particulier dans des liquides, tels que les boues de forage où elles sont plongées, ces antennes fonctionnaient, avec un très bon rendement, à des fréquences de quelques dizaines de megahertz mises en œuvre dans les outils de diagraphie électromagnétique à investigation profonde. Il est notamment remarquable, comme on l'exposera plus en détail ci-après, que les rendements obtenus sont très supérieurs à ceux que fourniraient les mêmes antennes dans l'air ou dans le vide pour les mêmes fréquences. Un tel effet est bien entendu très favorable aux applications à des mesures relatives à la propagation du rayonnement dans de tels milieux. En effet, plus l'on dispose de puissance rayonnée en émission et de puissance de signal au récepteur après la propagation dans le milieu à étudier, plus les mesures d'atténuation et/ou de déphasage correspondantes peuvent être faciles et précises.

On a en outre observé qu'il était possible de conformer des antennes du type défini précédemment de façon à leur conférer des caractéristiques de directivité appropriée pour les diagraphies dans les forages. C'est ainsi que, en ajustant la longueur mécanique de l'antenne montée par exemple sur le mandrin d'un outil de diagraphie, on parvient à provoquer un déphasage des courants le long de cette antenne propre à privilégier la propagation du rayonnement dans le milieu ambiant dans des directions transversales par rapport à ce mandrin entre une antenne émettrice et une antenne réceptrice.

Enfin, l'application des antennes qui viennent d'être définies aux outils de diagraphie dans les forages s'accompagne d'un certain nombre d'effets bénéfiques spécifiques de ce type d'applications qui seront passées en revue ultérieurement plus en détail.

Selon un mode de réalisation, le milieu non conducteur est une plaque d'un matériau diélectrique. Selon un autre mode de réalisation particulièrement adapté aux applications de l'outil à des fonctionnements à fréquence basse, le matériau non conducteur est un matériau magnétique à forte perméabilité magnétique.

Selon un mode de réalisation préféré, l'impédance de chaque antenne est adaptée à l'impédance d'une liaison coaxiale qui la relie à des circuits électroniques par un réglage de la position du point de raccord de l'âme de cette liaison coaxiale le long du premier élément conducteur.

Selon une forme de réalisation, les antennes sont montées sur des mandrins d'outils. Il est alors particulièrement avantageux de disposer le premier élément conducteur autour de ce mandrin pour réduire sa longueur mécanique parallèlement à la dimension longitudinale de ce dernier, tandis que le second élément s'étend sur deux dimensions en formant un élément cylindrique de masse disposé à l'intérieur du premier. Ce deuxième élément peut alors jouer le rôle d'écran vis-à-vis du premier contre les influences perturbatrices des signaux à l'intérieur de la sonde, par exemple du courant d'alimentation d'un oscillateur alimentant l'émetteur. Il est possible, en particulier, de prolonger ce deuxième élément au-delà de l'antenne, de façon à former un tube écran continu le long de la sonde à l'intérieur duquel passent les conducteurs d'alimentation des circuits de l'outil. En outre, divers modes de réalisation sont alors prévus pour améliorer la protection de l'antenne, tout en minimisant ou en éliminant la propagation de l'énergie électromagnétique en mode transversal (mode TEM) de l'émetteur vers les récepteurs et pour obtenir un meilleur aménagement de l'espace interne de l'outil.

Selon une application particulièrement avantageuse des antennes conformes à l'invention, dans le cas où le second élément de l'antenne forme un élément cylindrique de masse à l'intérieur du premier élément, il est possible de prolonger celui-ci de part et d'autre de l'antenne pour le mettre en contact électrique direct avec l'extérieur de la sonde. La sonde est alors formée avantageusement par un corps tubulaire en acier dont une portion est utilisée pour former le deuxième élément de l'antenne, lequel est recouvert d'un matériau diélectrique qui supporte le premier élément ou élément rayonnant de l'antenne.

On aboutit ainsi à une nouvelle conception d'un outil de diagraphie électromagnétique dans lequel le corps de sonde est conducteur. Cette conception peut trouver des applications dans tous les domaines de fréquence d'utilisation des outils, y compris aux fréquences les plus basses. Elle permet également d'envisager la combinaison d'outils mettant en œuvre des rayonnements électromagnétiques avec des outils utilisant d'autres types de phénomènes physiques. Selon un mode de réalisation, on équipe une électrode métallique de conduction de courant à travers la formation pour des mesures de résistivité avec une antenne du type indiqué précédemment dans laquelle le deuxième élément conducteur est lié électriquement avec le corps de l'électrode.

D'une façon générale, on peut escompter une augmentation de rendement tout à fait considérable des antennes équipant les outils conformes à l'invention par rapport aux antennes à bobines traditionnellement utilisées dans les outils de diagraphie de forage. Les puissances disponibles aux fins de mesure de la propagation du rayonnement sont d'un ordre de grandeur très supérieur à celui qui était accessible auparavant. Cette amélioration a des conséquences remarquables sur le plan de la performance des outils conformes à l'invention ainsi que de leur champ d'application, en particulier lorsque ces antennes sont utilisées à la fois comme récepteurs et comme émetteurs, l'efficacité de leur système rayonnant se trouvant en effet multiplié par plusieurs milliers de fois.

En particulier, les outils munis d'antennes du type indiqué permettent une investigation des milieux environnant un trou de forage dans lequel la résistivité des boues de forage est sensiblement plus faible que celle qui était considérée jusqu'à présent comme minimale pour le fonctionnement correct d'outils de propagation électromagnétique. Ils présentent en outre divers avantages sur le plan de la réalisation matérielle de tels outils, notamment de leur dimensionnement, tant extérieur qu'intérieur.

Les antennes définies ci-dessus s'appliquent particulièrement bien au montage sur mandrins d'outils d'investigation profonde qui sont destinés à opérer à des fréquences de quelques dizaines de megahertz, comme les outils à bobines décrits plus haut.

On a trouvé, en outre, que ces antennes pouvaient avantageusement s'appliquer également aux outils de diagraphie électromagnétique dans la gamme des fréquences relativement basses, en dessous de 10 megahertz par exemple, notamment lorsqu'on emploie un matériau à forte perméabilité magnétique entre les deux éléments conducteurs de l'antenne, ainsi que dans la gamme des fréquences les plus élevées, audessus de 200 megahertz par exemple. En particulier, dans ce dernier cas, on réalise de façon simple des antennes propres à être montées sur patins.

D'autres aspects et avantages de l'invention apparaîtront à la lecture de la description suivante donnée à titre d'exemple, en référence aux dessins annexés, dans lesquels:

la figure 1 représente schématiquement un outil de diagraphie électromagnétique auquel est appliquée l'invention;

la figure 2 est un schéma électrique équivalent au branchement d'une antenne de l'art antérieur;

la figure 3 est une représentation schématique en perspective d'une antenne du type biplaque;

la figure 4 est un schéma de constitution et de branchement d'une antenne biplaque;

la figure 5 est un schéma équivalent au schéma de la figure 4;

la figure 6 est une représentation d'une antenne pour mandrin conformément à l'invention;

la figure 7 représente une autre forme de réalisation d'une antenne pour mandrin;

la figure 8 représente un schéma de montage d'une antenne du type de la figure 7 sur un outil de diagraphie;

la figure 9 représente une variante de réalisation d'une antenne pour mandrin;

la figure 10 représente une sonde de diagraphie équipée d'antennes sur mandrin conformes à l'invention;

la figure 11a représente une variante de réalisation d'un outil semblable à celui de la figure 10;

la figure 11b est une vue agrandie d'un détail de la figure 11a coupé par un plan diamétral longitudinal;

les figures 12 et 13 sont des schémas de branchement d'antennes biplaques dans certains cas d'utilisation;

la figure 14 représente une antenne biplaque en forme de bouton;

la figure 15 représente un patin pour outil de diagraphie comportant des antennes biplaques;

la figure 16 représente un autre mode de réalisation d'un patin conformément à l'invention;

la figure 17 montre encore une autre forme de réalisation d'un patin conforme à l'invention;

la figure 18 représente schématiquement la constitution d'un outil combiné à électrodes et à antennes conforme à l'invention.

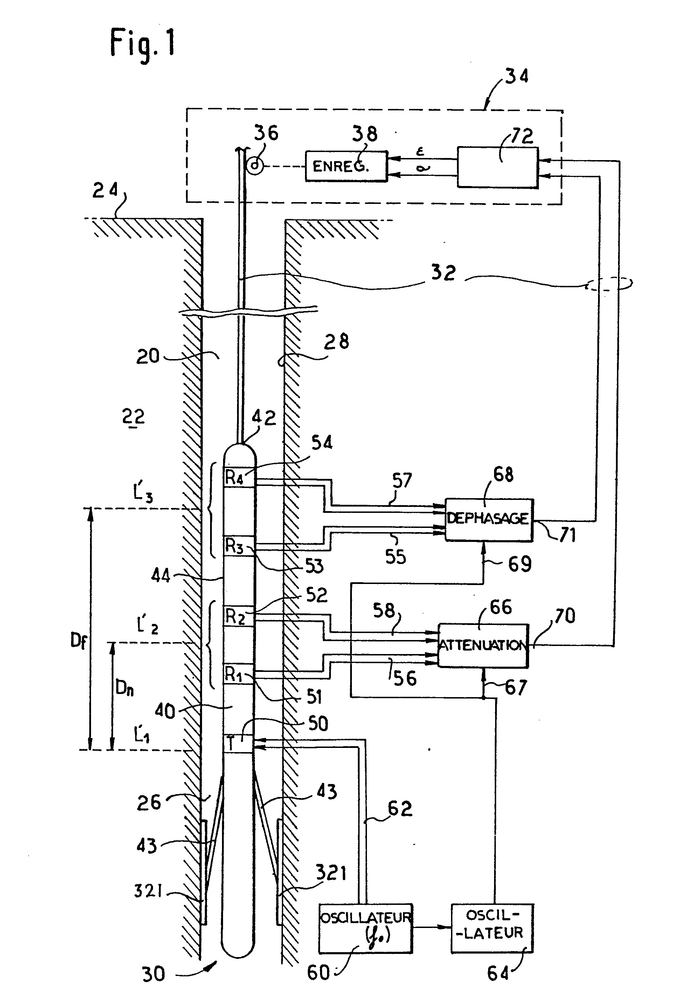

Un forage 20 (figure 1) limité par une paroi 28, traverse des formations géologiques 22 depuis la surface du sol 24 dans une direction sensiblement verticale dans cet exemple. Il est rempli d'un fluide de forage 26, la densité de ce fluide ou boue de forage étant déterminée et ajustée pour que la pression hydrostatique exercée par ce fluide sur la paroi 28 du forage 20 équilibre la pression interne des formations traversées et permette ainsi de maintenir l'intégrité de la paroi 28. Dans le forage 20 est suspendu un outil de diagraphie électromagnétique 30 à l'extrémité d'un câble 32 propre à le supporter mécaniquement lors de ses déplacements dans le forage 20 ainsi qu'à permettre de relier électriquement l'outil 30 à une station de surface 34. Le câble 32 passe, à cette station, le long d'un galet 36 dont le déplacement angulaire permet de suivre les variations de profondeur de l'outil et de commander l'entraînement d'un support d'enregistrement, magnétique ou photographique par exemple, dans un enregistreur 38 pour effectuer un relevé ou diagraphie de données transmises par l'outil 30 à travers le câble 32, en fonction de la profondeur de cet outil 30.

L'outil 30 comprend un corps de sonde allongé ou mandrin 40 suspendu par son extrémité supérieure 42 au câble 32 et qui comporte une enveloppe externe 44 propre à isoler les parties fonctionnelles de l'outil du forage 20. Au voisinage de l'extrémité intérieure du mandrin 40 est monté un émetteur 50 (T) constitué par une antenne propre à l'émission d'énergie électromagnétique à des radio-fréquences dans l'environnement immédiat du trou de forage 20 et les formations 22 avoisinantes. Au-dessus de l'émetteur 50 est montée, sur le mandrin 40, une première paire d'antennes réceptrices 51 et 52 (R1 et R2) verticalement espacées à une distance prédéterminée. La distance entre l'émetteur 50 (T) et le milieu $L'_2$ de l'intervalle séparant les récepteurs R1 et R2 est repérée par $D_n$.

Au-dessus de cette paire d'antennes est montée, sur le mandrin 40, une autre paire d'antennes réceptrices longitudinales espacées 53 et 54 (R3 et R4). Le milieu $L'_3$ de l'intervalle entre ces antennes est situé à une distance $D_f$ de l'émetteur 50 supérieur à $D_n$.

L'émetteur 50 est propre à émettre une onde électromagnétique dans un dièdre de 360° autour de l'axe du mandrin 40. Il est alimenté à partir d'un oscillateur 60 logé à l'intérieur de l'enveloppe 44 par l'intermédiaire d'une liaison coaxiale 62. L'oscillateur 60 commande également un oscillateur 64 propre à fonctionner à une fréquence légèrement supérieure ou légèrement inférieure (quelques dizaines de kilo hertz d'écart).

Les récepteurs 51, 52 (R1 et R2) sont propres à détecter des rayonnements électromagnétiques qui leur parviennent après s'être propagés à travers les formations 22 dans un dièdre de 360° autour de l'axe du trou de forage 20. Ils sont connectés à un comparateur d'amplitude 66 recevant la fréquence de sortie de l'oscillateur 64 sur une entrée 67.

Les récepteurs 53 et 54 (R3 et R4) sont reliés aux entrées d'un détecteur de phase relative 68 qui reçoit sur une entrée 69 la fréquence de sortie de l'oscillateur 64.

Les antennes réceptrices 51, 52 sont reliées au comparateur d'amplitude 66 par des câbles coaxiaux 56 et 58 respectivement. Les antennes réceptrices 53 et 54 sont reliées au détecteur de phase 68 par des câbles coaxiaux reliées au détecteur de phase 68 par des câbles 55 et 57 respectivement. Les deux circuits 66 et 68 comprennent chacun un mélangeur de signaux issus de l'oscillateur 64 et des signaux reçus des antennes 51, 52 et 53, 54 respectivement, afin d'en dériver un signal dont la fréquence est relativement basse (quelques dizaines de kilo hertz), pour déterminer d'une part la différence d'amplitude des signaux reçus par les récepteurs R1 et R2 et, d'autre part, leur déphasage des signaux reçus par les récepteurs R3 et R4. Les deux informations correspondantes sont disponibles aux sorties 70 et 71 des circuits 66 et 68, respectivement et sont transmises à la surface par le câble 32 à un organe de traitement 72 propre à alimenter l'enregistreur 38 en signaux de diagraphie représentant par exemple la constante diélectrique et/ou la conductivité des formations intéressées par la propagation des ondes émises par l'émetteur 50. Le câble 32 assure également l'alimentation en puissance des oscillateurs 60 et 64, ainsi que des circuits électroniques 66 et 68 qui sont logés dans l'outil ou dans la sonde 40.

Des outils ayant la structure générale qui vient d'être décrite en référence à la figure 1 sont connus dans l'art antérieur, par exemple par le Brevet Etats-Unis 4 185 238 précité (Huchital et TABANOU).

On a constaté cependant que l'emploi de ces outils se heurte à un certain nombre de limites qui tiennent à l'insuffisance des puissances de rayonnement électromagnétique qu'ils permettent de mettre en jeu dans les formations à étudier. Ainsi, par exemple, sachant que l'atténuation des ondes électromagnétiques qui se propagent dans un milieu croît avec la conductivité de ce milieu, il n'est pas possible d'utiliser ou d'envisager l'emploi de tels outils dans des boues de forage dont la résistivité est inférieure à 0,1 ohm par mètre, ce qui en diminue sensiblement le domaine d'application.

Dans ces outils, les émetteurs 50 et les récepteurs 51 et 52 sont en général constitués par des bobines comportant un petit nombre de spires, par exemple deux, montées sur un manchon isolant tel qu'une céramique. On a essayé d'augmenter la puissance de rayonnement transmise à l'aide de ces bobines tant en émission qu'en réception. Cependant, on a constaté que ces efforts se heurtaient à des limites dans le dimensionnement des outils de forage et dans les puissances électriques qui peuvent être mises en œuvre dans un outil raccordé à l'extrémité d'un câble de plusieurs milliers de mètres de long.

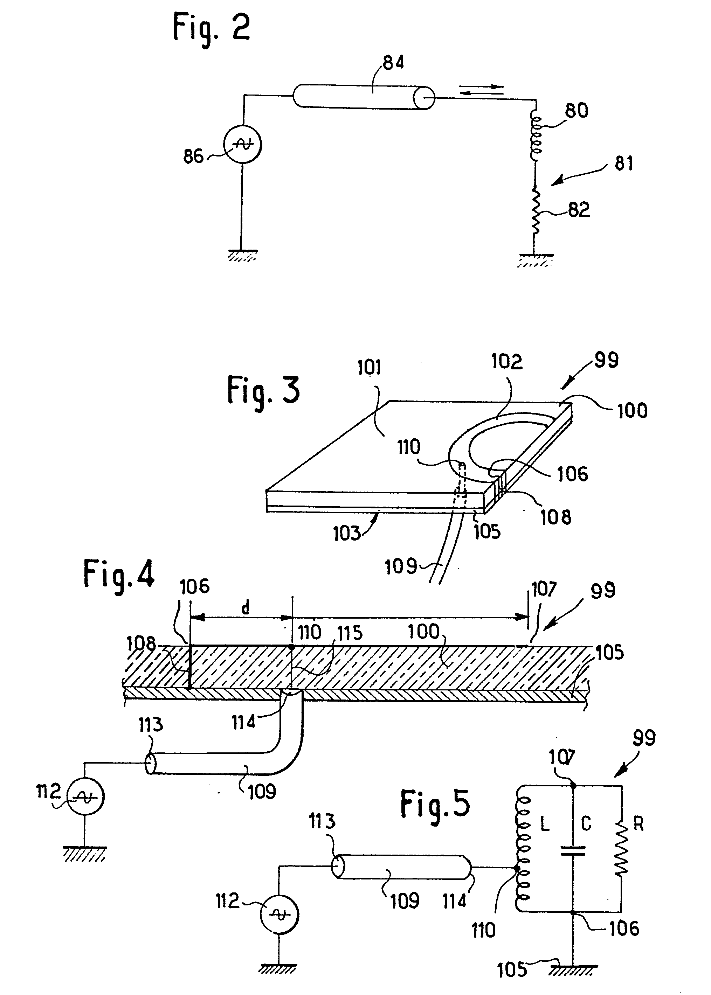

Une antenne 99 du type biplaque (figure 3) est constituée par la combinaison de deux éléments métalliques plaqués de part et d'autre d'un diélectrique selon une technique qui s'apparente à la fabrication de circuits imprimés. Une plaque de diélectrique plane 100 comporte sur l'une de ses faces 101 une lame conductrice 102 en cuivre, de forme curviligne dans cet exemple, imprimée dans le diélectrique 100. Ce diélectrique peut être par exemple une céramique haute température. La face opposée 103 à la face 101 de la plaque 100 est entièrement couverte d'un revêtement métallique 105, par exemple en cuivre, aluminium ou invar. Une extrémité 106 de la lame métallique 102 est reliée électriquement à la feuille métallique 105 par une liaison de court-circuit 108 à travers le diélectrique 100. Un câble coaxial 109 parvient à l'antenne 99 du côté de sa face inférieure 103. La gaine de ce câble coaxial 109 est électriquement raccordée à la plaque 105 tandis que son âme, après avoir traversé le diélectrique, est soudée à la lame 102 en un point 110 placé à une distance prédéterminée de l'extrémité 106. La lame 102 a une longueur curviligne sur la plaque 100 entre son extrémité 106 et son autre extrémité laissée électriquement libre (représentée en 107 sur la figure 4), égale dans cet exemple au quart de la longueur d'onde de propagation de la fréquence de fonctionnement de l'antenne.

On désigne en général la feuille 105 sous le nom de plan de masse, la lame 102 étant considérée comme formant l'élément rayonnant proprement dit.

D'une façon générale, on considère ici des antennes comportant un premier et un deuxième éléments métalliques en regard tels que la lame 102 et la feuille 105, séparés par un milieu non conducteur constitué, par exemple, par une plaque solide d'un matériau diélectrique 100. Ces éléments sont reliés électriquement à une de leurs extrémités, la longueur du premier élément étant déterminée en fonction de la longueur d'onde avec laquelle les signaux électromagnétiques se propagent dans le diélectrique séparant les deux éléments conducteurs à la fréquence considérée. On sait que lorsque la longueur d'une antenne transmettant un rayonnement électromagnétique est égale au quart de la longueur d'onde de ce rayonnement, ou à un multiple de ce dernier, l'impédance d'entrée de cette antenne est purement réelle, ce qui est une condition d'un rendement optimal de cette antenne.

Dans ce type d'antenne, les éléments conducteurs séparés par le diélectrique, sont disposés en regard; en revanche, il n'est pas indispensable pour leur fonctionnement que le deuxième élément conducteur, correspondant dans l'exemple de la figure 3 à la plaque 105, s'étende sur une surface. Il est possible de réaliser des antennes dans lesquelles le deuxième conducteur est également un élément allongé suivant un trajet sensiblement parallèle à celui du premier conducteur et disposé en regard de celui-ci. La disposition selon laquelle ce deuxième élément s'étend dans deux dimensions selon un plan ou une surface de masse présente un certain nombre d'avantages dont certains seront discutés ci-après.

Lorsque la fréquence de fonctionnement de l'antenne est relativement basse, par exemple de l'ordre de quelques dizaines de megahertz, le quart de la longueur d'onde correspondante dans l'air représente une longueur relativement importante par rapport aux dimensions des outils de diagraphie dans les forages. Dans le cas d'une fréquence de 25 megahertz, le quart de la longueur d'onde de propagation du rayonnement dans l'air est égal à environ 3 mètres. Lorsque l'antenne, au lieu d'être montée dans l'air, est placée dans un matériau diélectrique (figure 3 par exemple), la longueur d'onde rayonnée dans ce diélectrique pour une fréquence déterminée est inférieure à celle du rayonnement dans l'air en raison de la valeur plus élevée de la constante diélectrique du matériau.

Ceci s'explique en considérant la relation (II) définissant la constante de propagation. Lorsque la conductivité $\sigma$ du milieu dans lequel est placée l'antenne est nulle, on peut écrire la relation:

$$k = \omega \sqrt{\mu_0 \varepsilon} \qquad \text{(III)}$$

Sachant par ailleurs que lorsque la conductivité est nulle, la constante de propagation est

$$k = 2\,\pi/\lambda \qquad \text{(IV)}$$

on peut écrire:

$$\lambda = \frac{2\,\pi}{\omega}\,\frac{1}{\sqrt{\mu_0\varepsilon}} \qquad \text{(V)}$$

On vérifie que si la permittivité électrique $\varepsilon$ du matériau diélectrique sur lequel se trouve imprimé le premier élément est supérieure à 1, c'est-à-dire à la permittivité de l'air ou du vide, la longueur d'onde de propagation du rayonnement dans ce milieu diminue en fonction de la racine carrée de cette permittivité. Pour un milieu diélectrique de la permittivité égale à 4, la longueur d'onde correspondante sera donc d'environ la moitié de celle de propagation du rayonnement à la même fréquence dans l'air. Il en résulte que la longueur d'une antenne accordée sur un quart ou sur une moitié de longueur d'onde peut être divisée par deux lorsque cette antenne se trouve placée dans un diélectrique. Dans ces conditions, à 25 megahertz, la longueur d'antenne nécessaire pour obtenir un bon rendement de transmission dans ce diélectrique est égale à 1,5 mètres. Diverses dispositions sont prévues pour réaliser ces antennes dans un encombrement minimal sur un outil de diagraphie de forage.

Lorsque la fréquence des signaux à émettre augmente, la longueur d'onde correspondante diminue et il est possible alors d'envisager de donner à l'antenne des longueurs égales à une moitié de longueur d'onde du rayonnement dans le diélectrique. Dans ce dernier cas, on court-circuite les deux extrémités du premier élément tel que 102 avec le plan de masse 105. Bien entendu, au fur et à mesure que la fréquence des ondes électromagnétiques à émettre augmente, il est possible d'augmenter la longueur de l'antenne relativement à la longueur d'onde dans le diélectrique, pour un encombrement donné, ce qui est, dans tous les cas, un facteur d'amélioration du rendement.

Les essais effectués avec des antennes du type qui vient d'être défini ont montré d'une part que ces antennes pouvaient s'appliquer de façon satisfaisante aux échanges d'énergie de rayonnement avec des milieux fortement dissipatifs pour l'étude de la propagation de rayonnement électromagnétique dans ces milieux et, d'autre part, qu'elles permettaient d'atteindre des rendements tout à fait considérables, tant en émission qu'en réception, pour les mesures de propagation électromagnétique dans les forages par rapport aux bobines traditionnellement utilisées dans ce domaine.

En ce qui concerne la première observation, il faut noter que les propriétés des lignes biplaques ont été découvertes et utilisées pour la transmission de signaux électromagnétiques dans des milieux où l'atténuation due à la propagation de ces signaux est extrêmement faible. Or, les essais ont montré que non seulement les antennes du type qui viennent d'être décrites pouvaient fonctionner de façon satisfaisante dans des milieux fortement dissipatifs mais encore que, dans le cas particulier des outils de diagraphie dans les forages, lesquels sont appelés à fonctionner dans une boue de forage, l'efficacité de ces antennes était supérieure à celles qu'elles ont dans l'air ou le vide, toutes choses égales par ailleurs.

Dans l'air, ces antennes ont un rendement qui croît comme le carré de la fréquence transmise. Lorsqu'elles ont utilisées dans le cadre de télécommunications spatiales ou aériennes, elles mettent en jeu des fréquences de plusieurs centaines de megahertz avec un rendement qui, quoique moins bon que celui des antennes aériennes classiques, est cependant acceptable pour les besoins des communications par transmission dans un milieu non dissipatif. Or, les essais ont permis de constater que ces antennes pouvaient être employées avec un excellent rendement dans l'environnement des trous de forage à des fréquences beaucoup plus basses que leur fréquence d'utilisation courante dans l'air ou le vide. C'est le cas notamment à des fréquences de quelques dizaines de megahertz correspondant aux fréquences employées dans les outils de propagation électromagnétique d'investigation profonde.

Une explication de cette observation peut être avancée si l'on considère la relation approximative:

$$R_r \simeq k \left(\frac{l}{\lambda}\right)^2 \qquad \text{(VI)}$$

dans laquelle $R_r$ est la résistance de rayonnement de l'antenne;

l est la longueur mécanique ou hauteur efficace de cette antenne; et

$\lambda$ est la longueur d'onde de propagation du rayonnement dans le milieu dans lequel est plongée l'antenne.

L'énergie du rayonnement reçu ou émis par une antenne est de nature active. On appelle résistance de rayonnement $R_r$ la valeur de la résistance fictive qui produirait une dissipation thermique d'énergie équivalente à l'énergie rayonnée. Ainsi, plus la résistance de rayonnement d'une antenne est grande et plus importante est la puissance qu'elle est susceptible de transmettre. Le rendement $\eta$ de l'antenne peut être caractérisé en considérant, d'une part, la résistance de rayonnement correspondant à une transmission utile d'énergie et, d'autre part, une résistance de perte $R_p$:

$$\eta = R_r \, (R_r + R_p) \qquad \text{(VII)}$$

Si l'on considère la résistance de rayonnement $R_{ro}$ d'une antenne plongée dans l'air ou dans le vide:

$$R_{ro} \simeq k \left(\frac{l}{\lambda o}\right)^2 \qquad \text{(VIII)}$$

dans laquelle $\lambda o$ est la longueur d'onde du rayonnement dans l'air.

Dans l'eau, la longueur d'onde du rayonnement est, conformément à la relation (V) ci-dessus:

$$\lambda \, eau = \lambda o / \sqrt{\varepsilon} \, r$$

Or, la constante diélectrique de l'eau $\varepsilon_r$ est égale à environ 80, ce qui revient à dire que la résistance $R_r$ dans l'eau est approximativement 80 fois plus forte que dans l'air. Il en résulte que pour un rendement déterminé $\eta$ de l'antenne dans l'air, le rendement correspondant de la même antenne dans l'eau est très sensiblement supérieur et voisin de 1 dans la mesure où les résistances de perte $R_p$ qui n'ont pas changé peuvent alors être considérées comme négligeables devant la résistance de rayonnement de l'antenne dans l'eau.

La relation (V) est valable pour un milieu non conducteur. En pratique, la considération de la relation (II) définissant la constante de propagation permet de constater que si la conductivité $\sigma$ du milieu environnant dans l'antenne n'est pas nulle, la longueur d'onde de propagation tend à diminuer encore par rapport à sa valeur dans un milieu non conducteur.

On a également constaté que l'on pouvait effectivement adapter des antennes du type général considéré précédemment aux conditions particulières de leur utilisation sur des outils de diagraphie. Ainsi, on peut conformer ces antennes en fonction des contraintes d'encombrement de ces outils et leur conférer une certaine directivité en vue de privilégier les transmissions d'énergie rayonnante dans des directions transversales par rapport à la direction du forage.

En pratique, on peut monter la plaque de matériau isolant de façon que l'une de ses faces sur laquelle se trouve imprimé le premier élément conducteur apparaisse à la surface de l'outil, soit sur un mandrin, soit sur un patin. Cet élément conducteur peut être au besoin enroulé à la surface de ce mandrin ou de ce patin afin de conférer à l'antenne la longueur électrique recherchée tout en maintenant sa longueur mécanique dans des dimensions compatibles avec celles de l'outil. En outre, cette longueur mécanique peut être adaptée en fonction des caractéristiques de directivité prévues pour l'outil. La directivité d'une antenne dépend des déphasages des courants par unité de longueur mécanique le long de cette antenne. Il est avantageux que la longueur d'antenne soit suffisante pour obtenir des déphasages de courant qui privilégient l'action de l'antenne dans certaines directions aux dépens des autres, ce que l'on obtient notamment en prévoyant une longueur mécanique de l'antenne de l'ordre de grandeur de la longueur d'onde du rayonnement dans le milieu extérieur à l'antenne.

En ce qui concerne la deuxième observation effectuée à l'occasion des essais rapportés ci-dessus avec le nouveau type d'antennes, on peut avancer un certain nombre d'explications à l'amélioration exceptionnelle du rendement constatée par rapport aux bobines utilisées traditionnellement pour le type de mesure considéré.

En particulier, on a déterminé que le rendement des bobines traditionnelles est extrêmement faible en raison de la combinaison d'un certain nombre de facteurs. On remarque notamment (figure 2) qu'un transducteur de rayonnement tel que l'émetteur 50 formé par une bobine 81 peut être représenté par le schéma équivalent d'une self inductance 80 en série avec une résistance 82 branchée à la sortie d'un câble coaxial 84 alimenté par un oscillateur 86. L'impédance d'une telle bobine 81 est très fortement réactive en raison de la valeur élevée de la self 80, alors que la liaison coaxiale 84 destinée à alimenter cette bobine est conçue pour lui transmettre une énergie à rayonner de nature essentiellement active. Ce défaut d'adaptation des impédances est en soi la cause d'un mauvais rendement de la transmission d'énergie à très haute fréquence entre l'oscillateur 86 et l'antenne 81. Il se traduit en effet par l'établissement d'un système d'ondes stationnaires entre l'oscillateur 86 et l'entrée de l'antenne 81 à travers la liaison coaxiale 84 dont l'entretien absorbe une fraction très importante de l'énergie qui transite par cette liaison. Dans ces conditions, le rendement de la transmission d'énergie entre l'oscillateur 86 et la bobine 81 ne dépasse guère 10%. Le même phénomène s'observe pour les liaisons coaxiales des antennes de réception.

En outre, on a constaté qu'une partie seulement de l'énergie parvenant à la bobine 81 (dans le cas d'un émetteur) est transformée en énergie rayonnante susceptible de se propager à l'extérieur de l'outil 30, cette énergie correspondant à ce que l'on a appelé précédemment la résistance de rayonnement. Il existe en effet des pertes relativement considérables par effet Joule dans l'enroulement de la bobine proprement dite. A ces pertes ohmiques viennent s'ajouter des pertes diélectriques résultant de la liaison capacitive entre les conducteurs de la bobine proprement dite et les autres parties de l'outil qui sont à la masse. Ainsi, la puissance rayonnée à l'extérieur de la bobine ne représente qu'une fraction de quelques pourcents de la puissance parvenant effectivement à cette bobine. Au total, la puissance rayonnée par un système radiant à bobine n'est guère supérieure à environ 1% de la puissance disponible à la sortie de l'oscillateur d'alimentation. Les mêmes phénomènes affectent le rendement de ces bobines lorsqu'elles sont utilisées en réception.

Par rapport à ces bobines, les transducteurs de rayonnement du type considéré conformément à l'invention constituent de véritables antennes dont la longueur peut être accordée en fonction de la fréquence des rayonnements qu'elles sont appelées à transmettre de façon à leur conférer une impédance essentiellement active, condition d'un bon rendement de leur fonctionnement. Ainsi, l'impédance de ces antennes est très faiblement réactive contrairement au cas des bobines; et ce résultat peut être atteint grâce aux dispositions indiquées précédemment, avec des dimensions compatibles avec celles des outils destinés à être utilisés dans les trous de forage.

Cette impédance essentiellement active présente des avantages non seulement pour l'établissement d'une condition de résonance favorable à la conversion d'énergie électrique en énergie électromagnétique par l'antenne proprement dite, mais également sur le plan du rendement de la transmission de l'énergie électrique le long de la liaison coaxiale reliant l'antenne à son circuit électronique associé. Les pertes signalées précédemment à propos des bobines sont en effet évitées.

Ces antennes offrent en outre la possibilité d'effectuer, de façon très simple, une adaptation d'impédance de l'antenne à l'impédance du câble coaxial qui la relie aux circuits électroniques d'alimentation ou d'exploitation des signaux.

Un schéma d'une vue en coupe longitudinale développée d'une antenne biplaque est donné par la figure 4 dans lequel on a utilisé les mêmes références que sur la figure 3. Un oscillateur 112 est relié à une extrémité 113 de la liaison coaxiale 109 dont l'autre extrémité est reliée par sa gaine 114 au plan de masse 105, perpendiculairement à celui-ci, l'âme 115 de cette liaison étant isolée du plan de masse 105 et traversant le diélectrique 100 pour aboutir au point de jonction 110. Le plan de masse 105 constitue un écran électrique entre la lame 102 constituant la partie sensible de l'antenne 110 et les circuits électroniques situés derrière le plan de masse. Le point de jonction 110 de l'âme 115 du coaxial 109 se trouve à une distance d de l'extrémité 106 en court-circuit de cette antenne 99, qui est choisie pour réaliser une adaptation d'impédance en faisant jouer à l'élément 102 le rôle d'un autotransformateur, comme il va être exposé.

Un schéma équivalent à l'antenne 99, représenté à la figure 5, comporte, entre les extrémités 106 et 107 de la lame 102, une self bobinée L dont le nombre de tours correspond à la longueur de cette lame et une capacité C équivalente à la liaison capacitive existant entre la lame 102 et le plan de masse 105. Le plan de masse 105 est connecté à la masse. Le circuit LC en parallèle représente un circuit résonnant équivalent à l'antenne. Pour une longueur d'antenne égale au quart de la longueur d'onde rayonnée dans le diélectrique, les impédances du circuit contenant la self L et du circuit contenant la capacité C correspondent à la condition de résonance qui permet la conversion optimale de l'énergie électrique en énergie rayonnante. Une résistance R branchée en parallèle aux composants L et C, entre les extrémités 106 et 107 de l'antenne, représente une impédance équivalente aux pertes par conduction dans l'antenne et à la puissance rayonnée (résistance de rayonnement), cette puissance étant, comme on l'a indiqué précédemment, une puissance purement active. Le point de jonction 110 est un point intermédiaire de la self qui correspond à un nombre de tours $n_i$ de cette self entre le plan de masse 105 et la jonction 110, $n_t$ étant le nombre de tours total de la self L. La position de la jonction 110 est choisie de telle sorte que la grandeur $(n_i/n_t)^2$ x R soit sensiblement égale à l'impédance de la ligne coaxiale de liaison 109. La self L joue le rôle d'un auto-transformateur dont on peut calculer l'impédance rapportée à l'entrée, soit $(n_i/n_t)^2$ x R. Si cette impédance est égale à l'impédance de la ligne coaxiale utilisée avec l'antenne, on élimine totalement les pertes d'énergie par réflexion dans le coaxial, ce qui contribue à l'obtention d'un bon rendement de l'antenne.

L'accroissement potentiel de la puissance disponible dans l'environnement propre aux outils de diagraphie dans les trous de forages qui résulte de l'emploi d'antennes du type biplaque a des conséquences très importantes quant aux applications et à la réalisation de tels outils de diagraphie électromagnétique. En outre, certaines particularités technologiques des antennes biplaques comportent d'autres conséquences avantageuses qui seront examinées ci-après à propos de divers modes de réalisation et d'utilisation d'antennes pour outils de diagraphie électromagnétique.

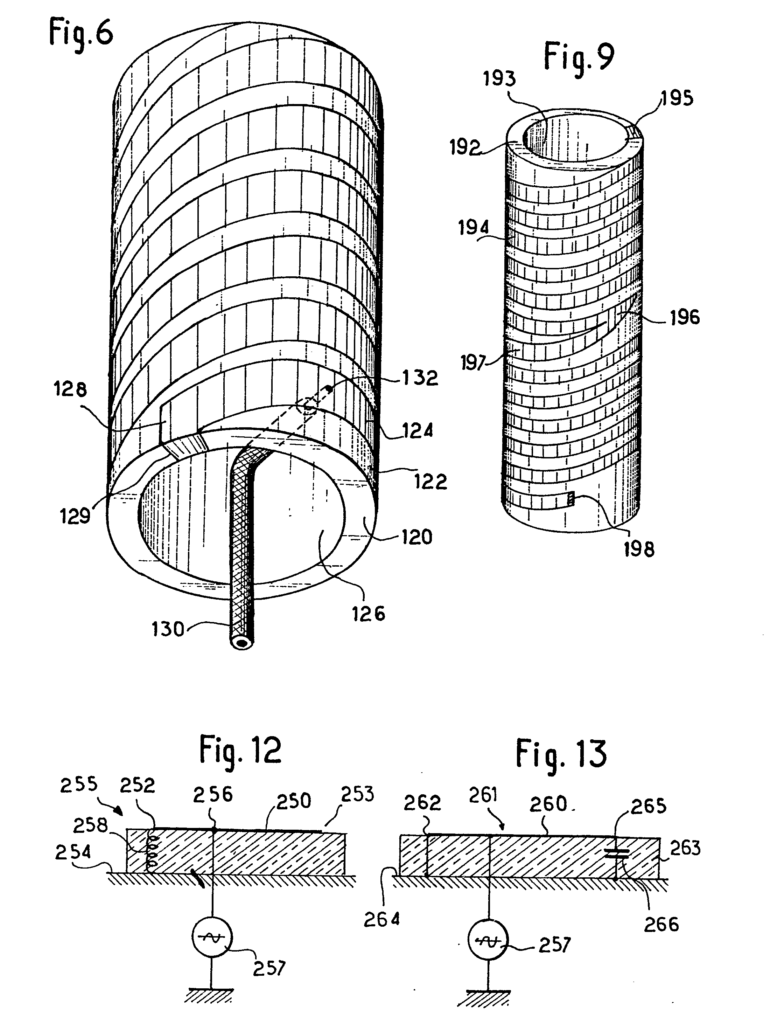

Par exemple, dans une antenne biplaque pour mandrin, figure 6, un premier élément conducteur 124 de l'antenne est enroulé sous la forme d'une hélice de pas régulier autour d'un manchon cylindrique 120, en matériau diélectrique, dont la face interne est tapissée par une feuille conductrice 126 formant le deuxième élément conducteur ou élément de masse. L'élément conducteur 124 est une lame de cuivre imprimée dans la surface 122 du manchon 120 sur une longueur développée égale au quart de la longueur d'onde de propagation du rayonnement à la fréquence considérée dans le matériau constituant ce manchon 120. Le pas de l'enroulement de la lame 124 est relativement serré et l'espacement longitudinal entre les spires de cette lame est sensiblement inférieur, comme représenté, à la largeur de cette lame 124.

Le manchon est constitué par une céramique ou un matériau composite à base de fibre de verre et de résine. La lame 124 y est implantée selon une technique d'impression classique du type utilisé dans la réalisation de circuit imprimé, et par exemple par gravure ou électrodéposition. L'extrémité inférieure 128 du premier élément 124 est reliée électriquement à une source de puissance à haute fréquence par une liaison coaxiale 130 ayant une âme connectée en un point 132 de la face interne de la lame en hélice 124 (c'est-à-dire sa face en contact avec le diélectrique 120). L'âme de cette liaison coaxiale traverse ce diélectrique perpendiculairement à la surface interne du manchon de diélectrique 120, la gaine du coaxial étant reliée à l'élément de masse cylindrique 126.

Une telle antenne est propre à être montée coaxialement au mandrin d'un outil de forage tel que celui représenté à la figure 1 pour constituer les éléments d'émission 50 et de réception 51 et 52. A titre d'exemple, une antenne réalisée à cet effet comporte huit spires d'une lame métallique de un dixième de millimètre d'épaisseur de cuivre dont la largeur (dimension mesurée dans le sens axial) est de 5 mm, le pas de l'hélice étant de 7,5 millimètres, sur un manchon de diamètre externe de 8 centimètres.

La surface interne du manchon est tapissée d'une feuille métallique de un millimètre d'épaisseur formant plan de masse. Le manchon isolant est constitué par un polysulfone et a une épaisseur de 5 millimètres. Pour un fonctionnement prévu à 25 megahertz, l'antenne accordée sur le quart de la longueur d'onde de l'onde de propagation de cette fréquence dans le matériau diélectrique du manchon 120 a une longueur développée d'environ 2 mètres et une longueur totale dans le sens axial ou longueur mécanique de 6 centimètres. Des mesures du rendement obtenu avec une telle antenne fonctionnant dans de l'eau salée ont fourni des valeurs de l'ordre de 90%, c'est-à-dire d'un ordre de grandeur sans commune mesure avec ce qui était concevable avec les bobines antérieures.

La longueur de l'antenne étant raccordée sur le quart de la longueur d'onde du rayonnement dans le diélectrique, la condition de résonance de cette antenne est respectée sans autre disposition particulière et notamment sans qu'il soit nécessaire de prévoir des circuits d'accords spéciaux. De tels circuits étaient nécessaires avec des transducteurs à bobines pour permettre de mettre le circuit de ces dernières dans la condition de résonance. La suppression de ces circuits d'accord est un avantage car ils sont malaisés à fabriquer et sujets à des fuites d'énergie rayonnante et ils occupent un espace non négligeable dans l'outil.

L'antenne émettrice et les antennes réceptrices sont séparées par des portions de tubes isolantes auxquelles elles sont raccordées par des moyens appropriés, par exemple par des manchons de connexion. Selon un autre montage, ces antennes sont disposées autour d'un manchon interne isolant commun supporté longitudinalement dans le mandrin 40. Selon une variante, l'enveloppe 44 du corps de sonde est formée, au moins sur une partie de sa longueur, par une extension d'un manchon d'antenne tel que 120 (figure 6) sur la hauteur utile du mandrin, un même manchon servant alors de support pour les premier et deuxième éléments conducteurs des diverses antennes émettrices et réceptrices.

Selon un mode de réalisation, les éléments de masse tels que 126, qui constituent le deuxième élément de chacune des antennes T, R1, R2 (figure 1) font partie d'un seul et unique manchon cylindrique conducteur s'étendant sur toute la hauteur. Cette disposition présente l'intérêt que le manchon conducteur ainsi formé à l'intérieur de l'outil agit comme écran à l'égard des antennes émettrices et réceptrices vis-à-vis de tous signaux perturbateurs circulant dans des conducteurs à l'intérieur du corps de l'outil, tels que, par exemple, le courant d'alimentation de l'oscillateur 60 qui engendre la puissance à émettre dans les formations.

A cet égard, les outils de propagation électromagnétique comportent une électronique de traitement des signaux captés par les antennes réceptrices R1 à R4 (figure 1) qui doit se trouver, en raison notamment du faible niveau de ces signaux à proximité de ces récepteurs. Cette électronique est normalement logée, soit à la partie supérieure du corps de sonde 40, soit dans un coffret spécialement aménagé au-dessus de ce corps de sonde auquel est attaché le câble 32. L'émetteur T doit donc être localisé en dessous du récepteur vers la partie inférieure de l'outil 30 et son oscillateur de puissance 60 doit être placé à proximité afin de limiter la longueur de la liaison coaxiale 62 qui l'alimente. L'alimentation de cet oscillateur par des conducteurs électriques en provenance de la surface à travers le câble 32 nécessite la traversée du corps de sonde par ces conducteurs qui passent donc à proximité des récepteurs R1, R2, etc... Etant donné le faible niveau des signaux circulant dans les circuits de ces récepteurs en réponse au rayonnement capté en provenance du milieu environnant, il est nécessaire de soustraire ces circuits à l'influence perturbatrice des courants induits par les conducteurs d'alimentation de puissance de l'oscillateur 60.

Une solution envisagée et appliquée dans certains cas pour éviter ce problème est d'alimenter cet oscillateur 60 par une batterie pendant les périodes de mesure où l'émetteur transmet un rayonnement en direction des formations, cette batterie étant ensuite propre à être rechargée en dehors des périodes de fonctionnement de la détection électromagnétique. Cependant, cette solution impose l'emploi d'une batterie dans l'environnement difficile dans lequel doivent travailler les outils de diagraphie dans les forages, en l'exposant notamment à de très hautes températures. Elle présente l'inconvénient d'une certaine fragilité, une réserve d'énergie insuffisante pour des opérations de diagraphie de longue durée et d'une fiabilité sujette à caution. A défaut de cette solution, il convient d'entourer les conducteurs qui alimentent l'oscillateur à partir du câble de suspension de l'outil d'un écran réalisé par un tube métallique longitudinal traversant la sonde jusqu'à l'oscillateur 60. Dans le cas des outils à bobines où la puissance émise ou reçue dépend du flux traversant les bobines, le passage de ce tube se fait aux dépens de la surface disponible pour le flux. Au contraire, le fonctionnement des antennes biplaques n'est pas influencé par la présence de ce tube dont le diamètre peut être élargi pour y loger l'électronique elle-même et les autres organes fonctionnels de l'outil. Ceci peut permettre de raccourcir l'outil ou d'accroître la capacité de traitement électronique à l'intérieur de celui-ci.

On peut prévoir d'utiliser les éléments de masse cylindrique tels que 126 (figure 6) des antennes comme écrans à l'égard des signaux perturbateurs circulant dans les câbles d'alimentation de l'oscillateur et dans tout autre circuit électrique nécessaire au fonctionnement de l'outil, en les reliant les uns aux autres par des tubes de raccord métalliques de façon à former une gaine cylindrique continue. Ainsi, le tube écran formé par cette gaine est intégré dans les manchons d'antennes placés à faible distance de la périphérie de l'enveloppe du mandrin 40 et dégage la partie centrale interne de l'outil.

Dans certains cas, cependant, on pourrait craindre que cette gaine écran métallique ne joue, en combinaison avec la colonne de boue entourant le mandrin 40 et les milieux isolants qui les séparent, le rôle d'une liaison coaxiale dans laquelle une partie de l'énergie électromagnétique émise à la sortie de l'émetteur 50 se propagerait selon un mode de propagation transversal, connu sous le nom de mode TEM (TRANSVERSE ELECTROMAGNETIC MODE). Un tel mode de propagation est à éviter dans le contexte d'emploi des outils de diagraphie électromagnétique. En effet, l'onde qui se propage ainsi entre l'émetteur et les récepteurs le long du coaxial ainsi formé entre la gaine interne à l'outil et la boue a une amplitude très supérieure à celle des signaux que l'on désire capter et risque d'obscurcir complètement ces derniers à l'égard de l'électronique de détection. Il est donc important de chercher à éviter ce mode de propagation et de concentrer la plus grande partie possible de l'énergie sortant de l'émetteur 50 (T) vers la paroi du trou et les formations environnantes.

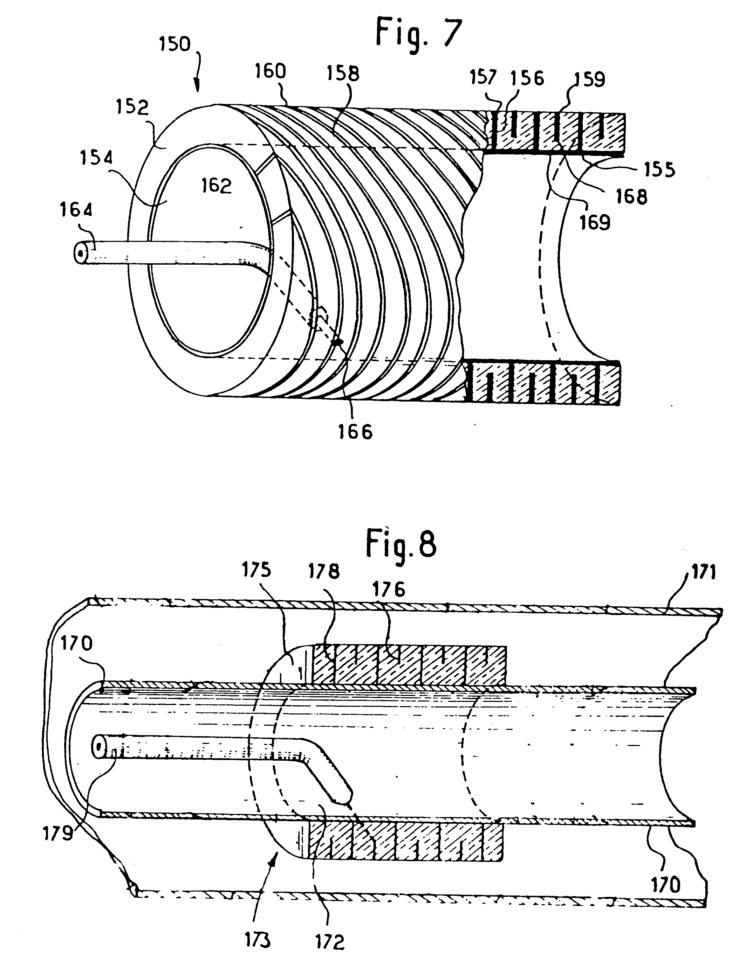

Selon un mode de réalisation, il est prévu de limiter la transmission en mode TEM en disposant l'élément conducteur enroulé autour du manchon de l'antenne coaxial au mandrin, non pas à plat comme dans le cas de la figure 6, mais sur la tranche, comme illustré sur la figure 7 qui montre une antenne 150 comprenant un manchon diélectrique 152 comportant, sur sa face interne, un conducteur cylindrique de masse 154 raccordé à une gaine cylindrique, non représentée, qui parcourt toute la hauteur de l'outil et relie notamment tous les conducteurs de masse correspondants des autres antennes. Autour de ce cylindre de masse 154 est enroulée, en contact électrique avec ce cylindre, sur sa tranche 155, une bande métallique 156 qui est disposée sur champ selon un plan approximativement perpendiculaire à la surface du cylindre 154 et enroulée en hélice autour de ce dernier sur une longueur de manchon 152 correspondant à la longueur de l'antenne. La tranche externe 157 de la bande 156 affleure à la surface externe 160 du manchon diélectrique 152. Une bande métallique conductrice 158 formant le premier élément de l'antenne est enroulée en hélice dans l'épaisseur du manchon 152 en formant des spires disposées sur champ et intercalées entre les spires de l'élément de masse 156 et dont le bord externe 159 affleure à la surface extérieure 160 du manchon diélectrique 152. La bande 158 est raccordée électriquement à une de ses extrémités 162 au revêtement métallique 154 gainant intérieurement le manchon diélectrique 152. L'antenne ainsi formée est reliée à un câble coaxial 164 dont une extrémité est perpendiculaire à la surface interne du manchon 152. La gaine de ce câble est raccordée électriquement au cylindre de masse 154 et l'âme de ce conducteur est reliée à la bande 158 en un point 166 à une distance convenable de l'extrémité 162 le long de cet enroulement, pour réaliser l'adaptation d'impédance dont il a été parlé. L'enroulement en hélice de la bande 158 s'étend sur une distance le long du cylindre 152 correspondant à la longueur développée d'antenne recherchée.

Cette disposition permet de réduire les transmissions d'énergie électromagnétique en direction parallèle à l'axe du mandrin 44. En effet, la formation d'ondes propres à se propager en mode TEM à l'intérieur de la liaison coaxiale définie précédemment repose surtout sur l'existence d'une capacité distribuée entre les spires du premier élément d'antenne 158 enroulé et la colonne de boue entourant l'outil. La valeur de cette capacité dépend des surfaces efficaces des armatures en regard. Dans le cas de la figure 7, la surface de la tranche des spires 158 qui se trouvent vis-à-vis de la colonne de boue est très réduite et contribue donc de façon minimale à la formation d'ondes transmises selon le mode TEM.

Un manchon métallique 170 est placé à l'intérieur de l'enveloppe isolante 171 d'un mandrin d'outil de diagraphie électromagnétique (figure 8), dans le prolongement de l'élément cylindrique de masse 172 d'une antenne 173 de type biplaque avec conducteurs sur champ 176 et 178, analogue à l'antenne représentée à la figure 7. Le conducteur métallique sur tranche 178 est noyé dans le diélectrique 175 et est relié électriquement par sa tranche interne au cylindre de masse 172. L'alimentation est réalisée comme précédemment par un câble coaxial 179.

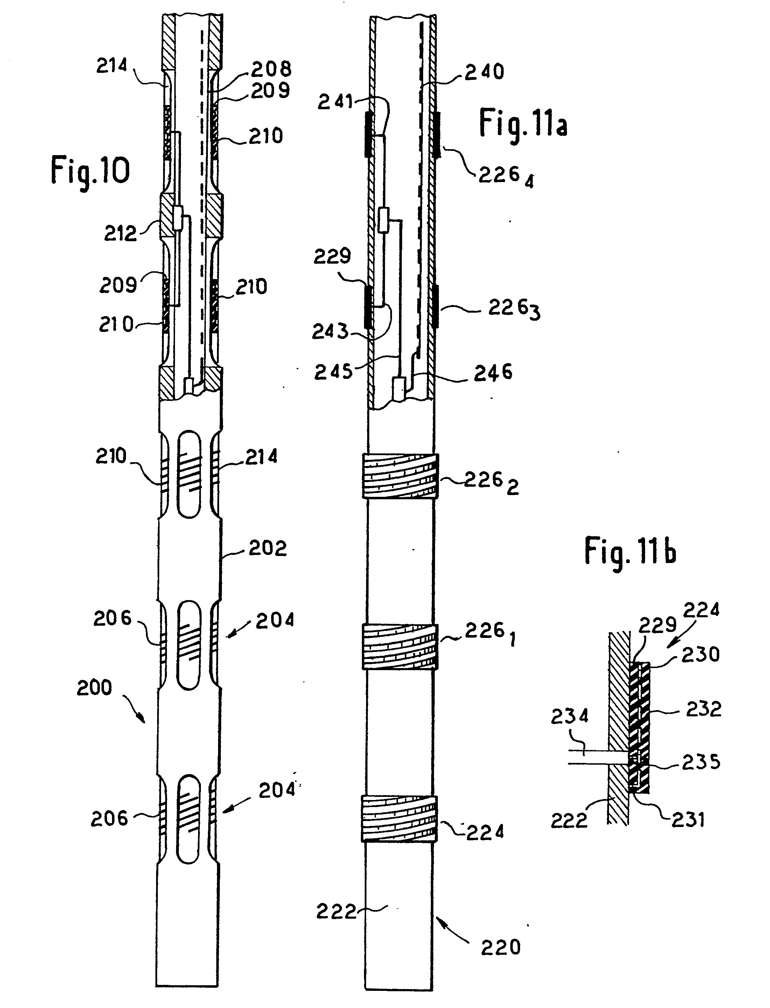

Enfin, dans tous les cas où l'on désire lutter contre le mode de propagation transversal (TEM) pour les raisons qui viennent d'être indiquées, on réalise de préférence l'enroulement en hélice du premier élément de l'antenne (figure 9) sous forme de deux portions longitudinales enroulées selon des pas égaux et de sens inverse. Ainsi, sur un manchon diélectrique 192 dont la partie intérieure est gainée d'un revêtement métallique 193 formant un élément cylindrique de masse, une lame métallique externe 194 est enroulée en hélice, en partant d'une extrémité 195 court-circuitée avec le cylindre de masse 193, dans un sens jusqu'en un point de rebroussement 196 correspondant à la moitié de la longueur développée de l'antenne, à partir duquel le pas de l'enroulement s'inverse pour former les spires 197. L'extrémité 198 de cet élément rayonnant est court-circuitée avec le plan de masse. La longueur totale de l'antenne est accordée sur la moitié de la longueur d'onde envisagée dans le diélectrique 192.

Elle est alimentée en deux points voisins respectivement de ses extrémités 195 et 198 par deux câbles coaxiaux sous deux tensions en opposition de phase. On obtient donc deux antennes quart d'onde en série, géométriquement opposées, mais dans lesquelles le courant est de même sens, ce qui favorise le rayonnement en mode recherché, tandis que les champs électriques correspondant à la tension entre chacune des portions d'enroulement de pas inverses et la colonne de boue sont de signes différents et ont des effets inverses qui tendent à annuler la transmission en mode TEM.

Selon une autre forme de réalisation, une sonde 200 (figure 10) comporte un mandrin cylindrique entouré d'une enveloppe externe 202 métallique. Autour de cette enveloppe sont disposées, en plusieurs emplacements longitudinalement espacés 204, des antennes biplaques 206 du type à enroulement selon le mode de réalisation de la figure 6. Comme le représente la partie supérieure de la figure 10 qui montre la sonde partiellement coupée par un plan diamétral longitudinal, l'enveloppe externe métallique 202 présente, en chaque emplacement 204, une partie 208 de diamètre externe rétréci qui constitue par elle-même un élément cylindrique de masse pour chaque antenne 206. Chacune de ces parties rétrécies 208 est revêtue d'un manchon diélectrique 209 autour duquel est enroulée une lame de métal en hélice 210 dont une extrémité est mise en court-circuit avec la partie métallique rétrécie 208 de l'enveloppe conductrice 202. L'épaisseur combinée du diélectrique 209 et de l'enroulement 210 est telle que le diamètre de l'ensemble soit inférieur au diamètre de l'enveloppe 202 dans les parties 212 qui séparent les emplacements 204. Ces portions 212 sont reliées entre elles par une série de barreaux 214 de direction longitudinale passant par dessus chaque enroulement 210 qui forment ainsi une cage à barreaux parallèles autour des antennes 206 dans un but de protection mécanique. Les barreaux longitudinaux 214 font corps avec l'enveloppe 202. Dans cette réalisation, l'élément cylindrique de masse des antennes se trouve en contact électrique direct avec la boue 202. Aucune propagation en mode TEM ne peut avoir lieu en l'absence d'une structure du type coaxial avec diélectrique entre un conducteur interne et la colonne de boue entourant l'outil.

Selon une autre forme de réalisation (figure 11a), l'enveloppe d'une sonde 220 est constituée par un tube métallique cylindrique 222 s'étendant sur toute la hauteur de l'outil. Autour de l'enveloppe 222 sont montées, dans des positions longitudinalement espacées, une antenne émettrice 224 à la partie inférieure de l'outil et une série d'antennes réceptrices $226_1$, $226_2$, $226_3$ et $226_4$. Chacune des antennes 224, $226_1$ à $226_4$ comprend un revêtement diélectrique 229 accolé directement autour de la surface externe de l'enveloppe 222, laquelle forme un élément cylindrique de masse commun à toutes ces antennes. Autour de chaque manchon diélectrique 229 (figure 11b) est enroulée en hélice une bande métallique radiante 230 raccordée électriquement à l'enveloppe 222 à une de ses extrémités 231. L'enroulement 230 est noyé dans un revêtement isolant 232 à base de fibre de verre qui lui procure une protection à la fois mécanique contre les chocs et l'abrasion dus au mouvement de l'outil à l'intérieur du forage et chimique contre la corrosion.

Un câble coaxial 234 d'alimentation de l'antenne 224 passe à travers l'enveloppe 222. Sa gaine est connectée électriquement à cette enveloppe. L'âme 235 est connectée comme précédemment décrit pour réaliser l'adaptation d'impédance.

Si la protection offerte par le revêtement 232 est efficace d'un point de vue mécanique et chimique, elle n'est pas indispensable d'un point de vue électrique. Aucune propagation en mode TEM n'est à redouter.

L'électronique interne nécessaire au fonctionnement des outils est logée (parties coupées des figures 10 et 11a) dans l'espace interne délimité par les tubes conducteurs 202 et 222 à leur partie supérieure. Des supports 240 montent des cartes électroniques de traitement propres à être reliées à des couples de récepteurs $226_1$, $226_2$ et $226_3$, $226_4$ par l'intermédiaire de câbles coaxiaux 241, 243, 245 et 246.

La constitution des circuits électroniques et des liaisons appropriées pour alimenter l'émetteur 224 et pour permettre le traitement des signaux issus des récepteurs $226_1$ à $226_4$, est bien connue et, par exemple, décrite dans US-A-4 185 238.

Ainsi, on a réalisé une sonde de diagraphie par propagation d'ondes électromagnétiques comportant une enveloppe métallique qui présente, outre la suppression de la propagation d'ondes en mode TEM, un certain nombre d'avantages pour la réalisation des outils, tant sur le plan de la robustesse que de la facilité de montage et par conséquent du coût de fabrication. Ils peuvent permettre notamment de minimiser ou de prendre en compte les variations d'écartement des bobines le long des mandrins sous l'effet de la dilatation thermique.

Les modes de réalisation qui viennent d'être précédemment passés en revue pour le montage d'antennes sur le mandrin d'outils électromagnétiques de diagraphie présentent un certain nombre d'avantages sur les réalisations de l'art antérieur, notamment sur les outils faisant appel à des bobines comme transducteurs d'énergie électromagnétique entre l'outil et le milieu environnant.

Un avantage essentiel par rapport à ces réalisations antérieures de transducteurs réside dans l'amélioration du rendement de ces antennes. On a constaté que le rendement obtenu est de plusieurs dizaines de fois et même jusqu'à près de cent fois le rendement des bobines utilisées précédemment.

Cette amélioration du rendement est disponible, non seulement sur l'émetteur d'énergie mais sur les récepteurs. Avec des antennes dont le rendement est multiplié, par exemple par 50, la puissance électrique correspondant aux signaux reçus pour une même puissance d'émission de signaux électriques est 2500 fois plus élevée. Les puissances utiles qui peuvent être mises en jeu pour l'étude de la propagation sont donc d'un ordre de grandeur complètement différent de ce qu'il était possible d'atteindre jusqu'à présent.

De nombreuses conséquences découlent de cette amélioration. Bien entendu, elle peut être mise à profit pour simplifier l'électronique de détection associée aux antennes réceptrices R1 à R4 (figure 1). Cette augmentation très importante de rendement est obtenue avec des antennes qui présentent un encombrement de même ordre de grandeur que celui des antennes de l'art antérieur et qui s'accommodent d'un diamètre de mandrin conventionnel pour les outils de diagraphie. Contrairement en effet aux transducteurs formés de bobines dont l'efficacité augmente avec leur diamètre, le rendement des antennes conformes à l'invention et par conséquent la quantité d'énergie rayonnante susceptible de transiter par ces antennes est indépendante de leur diamètre. Cette augmentation considérable de l'efficacité des antennes s'accompagne d'un accroissement de l'espace disponible pour loger l'électronique, même lorsqu'on alimente un émetteur à la base de l'outil à l'aide de conducteurs de puissance en provenance de la surface. Il est donc possible de diminuer la longueur totale de l'outil. D'une façon générale, le haut niveau de rendement de ces antennes permet d'envisager sans difficulté la perte de quelques points de rendement dans le cadre d'un compromis visant à améliorer les caractéristiques de l'outil.

L'augmentation de la puissance rayonnée permet d'appliquer la méthode d'investigation des formations par propagation électromagnétique avec des boues de forage beaucoup plus conductrices que dans le passé. En effet, l'atténuation des ondes propagées dans le milieu croît avec la conductivité comme on l'a exposé précédemment. Avec ce nouvel outil, on peut s'accommoder d'un taux d'atténuation de l'énergie rayonnée dans la boue environnant le forage beaucoup plus fort que ce qui était acceptable jusqu'à présent, sans diminuer pour autant la quantité totale d'énergie susceptible d'être détectée aux récepteurs proprement dits.

Ainsi, on peut opérer dans des boues dont la conductivité peut atteindre 0,05 ohm, ce qui permet d'étendre l'application de ce type d'outil à la quasi totalité des boues de forage employées actuellement. De même, il n'est plus indispensable de tenter d'augmenter le diamètre de l'outil pour minimiser l'épaisseur de la colonne de boue traversée par le rayonnement à l'émission et à la réception.

Une autre conséquence de l'augmentation considérable de la puissance rayonnée réside dans l'augmentation du rapport signal sur bruit aux récepteurs, augmentation qui permet d'améliorer la précision de la détection effectuée tout en utilisant une électronique plus simple et éventuellement plus fiable pour obtenir les informations recherchées. Enfin, on a vu qu'avec ce type d'antenne, on pouvait avantageusement employer un tube conducteur sur toute la longueur de la sonde et qui fonctionne comme écran vis-à-vis des éléments sensibles de ces antennes, sans engendrer de propagation indésirable selon le mode TEM, grâce à divers moyens.

Une sonde munie des antennes conformes à l'invention permet en outre d'augmenter la résolution de l'investigation tout en maintenant une profondeur d'investigation recherchée. Cette dernière dépend en effet de la distance entre les émetteurs et le récepteur, tandis que la résolution dépend de la distance entre les récepteurs de chaque paire. Les mesures effectuées par chaque paire de récepteurs sont des mesures différentielles de la variation de certains paramètres de propagation tels que l'atténuation ou le déphasage provoqués par une zone de formation dont l'épaisseur est définie par l'écartement de ces récepteurs (voir notamment US-A-4 185 238 précité). Plus cet écartement entre les récepteurs est faible, plus l'épaisseur de cette zone est petite et, en conséquence, plus la résolution de la mesure effectuée est bonne. Cependant, il est nécessaire de maintenir l'écartement des récepteurs d'une paire à une valeur suffisante pour que la différence entre les valeurs des paramètres des ondes reçues puisse être perçue et mesurée par l'électronique de détection et de traitement. C'est ainsi, par exemple, que si l'on veut détecter les différences de déphasage à une fraction de degré près, l'écartement des deux récepteurs correspondant doit être suffisant pour que les variations de ce paramètre entre deux formations de nature différente à distinguer présentent au moins cette valeur sur l'épaisseur de formation considérée. Il en va de même en ce qui concerne l'atténuation.

Pour augmenter la résolution, on est donc conduit à rechercher une augmentation des valeurs de l'atténuation et du déphasage mesurés des ondes électromagnétiques se propageant dans une zone de formation d'épaisseur donnée, ce qui peut être obtenu en accroissant la fréquence de fonctionnement de l'outil. Cependant, en raison de la plus forte atténuation des signaux qui accompagnent cette augmentation de fréquence, la puissance rayonnée doit être sensiblement plus grande si l'on désire être en mesure de recueillir, au niveau des récepteurs, des puissances encore suffisantes pour y être décelées et traitées convenablement. Ceci est possible avec les outils équipés d'antennes qui viennent d'être décrites, grâce à l'augmentation considérable du rendement que l'on peut en obtenir. Ainsi, avec une puissance à l'oscillateur d'émission d'un ordre de grandeur conventionnel, il est possible de rayonner des puissances suffisamment fortes pour leur faire subir une atténuation beaucoup plus élevée, notamment en opérant à des fréquences relativement plus élevées par rapport à l'art antérieur, tout en conservant un niveau de signal acceptable au niveau des récepteurs pour la détection et la mesure proprement dite. Ce résultat est atteint, en conservant une profondeur d'investigation importante qui implique un trajet des ondes électromagnétiques, entre l'émetteur et les récepteurs, relativement long, au cours duquel l'atténuation d'un signal de fréquence relativement plus élevée peut être considérable.

La puissance émise avec des antennes du type décrit est suffisante pour atteindre des profondeurs d'investigation de l'ordre d'un à deux mètres avec des antennes montées sur mandrin dans un domaine de fréquence pouvant s'élever jusqu'à environ 60 à 80 megahertz. La résolution que l'on peut obtenir pour cette fréquence opératoire est alors de 60 centimètres à un mètre. Dès que la fréquence de fonctionnement dépasse quelques dizaines de megahertz, il est possible de réaliser des enroulements sur mandrins d'une longueur utile égale à une demi-longueur d'onde et au-delà à une longueur d'onde, dans la mesure où la longueur d'onde diminuant quand la fréquence croît, il est possible, pour un encombrement longitudinal donné de l'antenne le long du mandrin, d'accorder la longueur développée de l'élément conducteur enroulé sur une fraction plus importante de la longueur d'onde du rayonnement.

Dans la gamme des fréquences relativement basses, la longueur développée d'antenne nécessaire pour obtenir l'accord avec le quart d'onde de propagation peut devenir prohibitive. Cependant, l'amélioration, toutes choses égales par ailleurs, du rendement intrinsèque de ces antennes, est suffisante pour rendre leur application attrayante à des fréquences très sensiblement inférieures à 20 megahertz et pouvant descendre en dessous de 1 megahertz. A ces fréquences, un moyen pour diminuer la longueur utile de l'élément radiant enroulé autour du mandrin (premier élément conducteur) consiste à modifier les connexions entre cet élément et l'élément de masse de l'antenne.

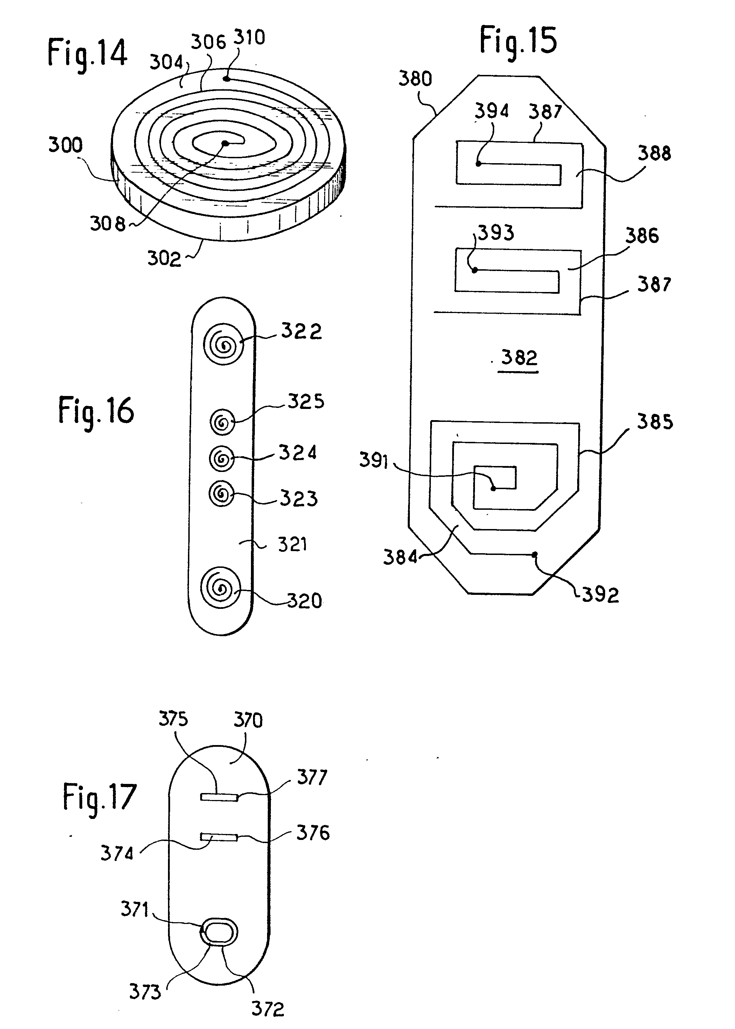

Un enroulement radiant d'une antenne biplaque 255, formé d'une lame métallique 250 représentée à la figure 12, a une longueur développée inférieure au quart de la longueur d'onde. Au lieu d'être en court circuit avec le plan de masse 254, l'extrémité 252 de l'élément 250 est raccordée au plan de masse 254 par une self inductance 258 dimensionnée de façon que l'ensemble résonnant formé par l'élément radiant 250 et la self inductance 258 couplée en parallèle par la capacité linéique entre les deux éléments conducteurs de l'antenne 250 et 254 constituent un circuit accordé pour la fréquence considérée. Le point d'injection 256 est raccordé à un oscillateur 257. L'autre extrémité 253 de l'élément 250 est électriquement libre.

Selon une variante de réalisation (figure 13) d'une antenne sur mandrin 261 destinée à fonctionner à fréquence relativement basse, un élément radiant 260 de longueur développée inférieure au quart de la longueur d'onde de rayonnement dans le diélectrique 263 à la fréquence envisagée a une de ses extrémités 262 connectée en court-circuit à un plan de masse. Son autre extrémité 265 est reliée au contraire au plan de masse 264 par un condensateur 266 dont la valeur est choisie de façon que le circuit équivalent à l'élément radiant 260 et au condensateur 266 couplé à la capacité linéique existant entre l'élément 260 et le plan de masse 264 constitue un circuit résonnant pour la fréquence opératoire de l'oscillateur 257.

Un autre moyen pour diminuer la longueur utile de l'élément raidant enroulé autour du mandrin, qui peut être combiné avec le précédent, consiste à utiliser, au lieu d'un matériau diélectrique entre les deux éléments conducteurs de l'antenne, un matériau à forte perméabilité magnétique. En effet, alors que les constantes diélectriques par rapport à l'air des matériaux usuels varient dans des proportions qui ne dépassent guère de 1 à 20, en général, la perméabilité magnétique de certains matériaux par rapport à celle de l'air peut atteindre plusieurs milliers losque la fréquence n'est pas trop élevée, c'est-à-dire reste inférieure à quelques dizaines de megahertz.

Si l'on se réfère à la relation (V), on constate que la longueur d'onde varie de façon inversement proportionnelle à la racine carrée de la perméabilité magnétique. Dans ces conditions, il est possible pour des antennes fonctionnant dans un domaine de fréquence inférieur à quelques dizaines de megahertz de sélectionner un matériau magnétique dont le point de Curie soit suffisamment élevé pour qu'il conserve sa forte valeur de perméabilité magnétique dans tout le domaine des températures d'utilisation des outils de diagraphie de forage.

Ainsi, si l'on utilise un matériau tel que de l'alumine ferromagnétique dont la perméabilité magnétique se situe aux environs de 250, on peut constituer une antenne avec un premier élément plaqué sur la face externe d'un manchon de ce matériau dont la face interne est revêtue d'un plan de masse. Si l'on donne à une telle antenne une longueur développée de 38 mètres, correspondant à un quart de la longueur d'onde dans ce matériau (par opposition à 600 m dans le vide), il est possible de faire fonctionner cette antenne à une fréquence de 500 kHz. On peut atteindre une telle longueur d'antenne à l'aide d'un enroulement de 120 tours sur un mandrin de 10 cm de diamètre.

Ainsi, on réalise un outil de diagraphie par propagation d'un rayonnement électromagnétique capable de fonctionner à fréquence relativement basse, inférieure à 1 MHz, fréquence où les mesures des paramètres relatifs à la propagation des ondes électromagnétiques dans la formation sont essentiellement influencées par la conductivité des milieux environnants et relativement peu par la constante diélectrique de ces milieux.

En montant les antennes sur un mandrin métallique, comme expliqué ci-dessus, on obtient un nouvel outil de conductivité qui, contrairement aux outils de conductivité classiques, ne requiert pas l'emploi d'un mandrin isolant sur une grande partie au moins de sa longueur. Ce nouveau type d'outil présente des avantages de simplicité, de robustesse et de stabilité dimensionnelle.

Cette nouvelle structure permet, en outre, d'allier un outil de mesure de conductivité à un outil de mesure de résistivité à électrodes en associant des antennes fonctionnant à fréquence relativement basse du type qui vient d'être indiqué à des manchons métalliques disposés autour du mandrin et constituant des électrodes, par exemple, d'un outil du type Double Laterolog. décrit dans US-A-2 712 627 déposé par H.G. DOLL.

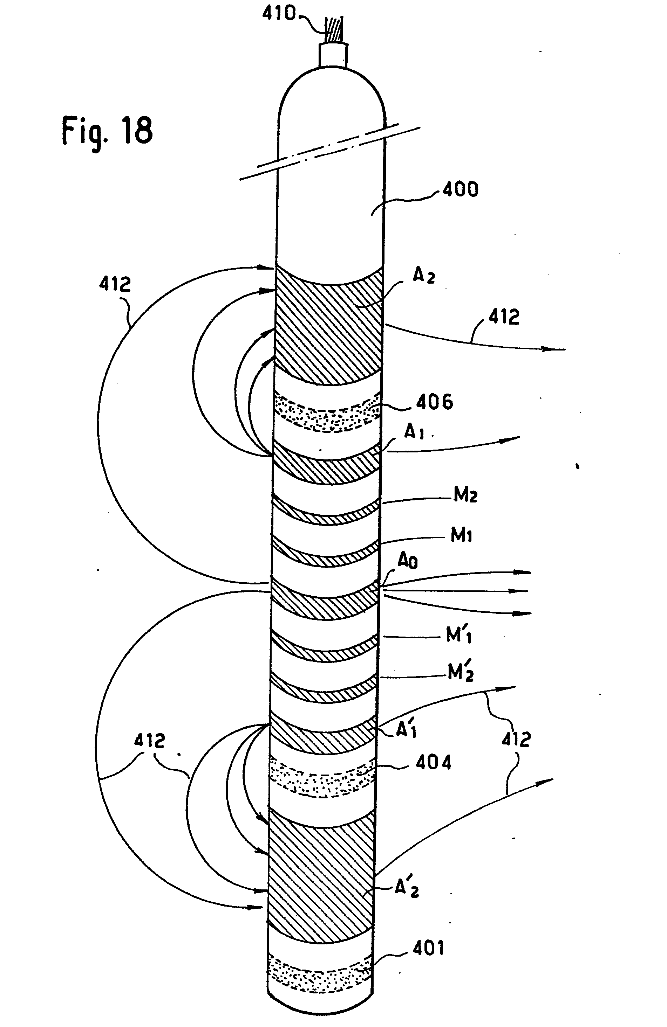

Un nouvel outil combiné de ce type comprend (figure 18) une sonde 400 sur laquelle est montée une électrode centrale $A_0$. De part et d'autre de $A_0$ sont disposés symétriquement deux paires d'électrodes de potentiel rapprochées $M_1$, $M_2$ et $M'_1$, $M'_2$ suivies en s'éloignant de l'électrode $A_0$ de premières électrodes de courant $A_1$ et $A'_1$ puis de secondes électrodes de courant $A_2$, $A'_2$. Les électrodes sont constituées par des bagues conductrices à la surface du mandrin, les électrodes $A_2$ et $A'_2$ prenant la forme de manchons allongés. Les circuits d'alimentation et de contrôle de ces électrodes sont bien connus, par exemple par US-A-3 772 589 déposé par A. SCHOLBERG. Ils permettent de faire passer des courants entre les électrodes $A_0$, $A_1$ et $A_2$ et $A_0$, $A'_1$ et $A'_2$ et des zones à plus ou moins grande distance de l'outil dans le milieu environnant en contrôlant ces courants de telle manière que la différence du potentiel entre les électrodes de mesure $M_1$ et $M_2$ et entre les électrodes $M'_1$ et $M'_2$ reste nulle.

Pour mémoire, on a représenté sur la partie gauche de l'outil le tracé de lignes de courants 412 dans la configuration d'investigation peu profonde et, sur la partie droite, le tracé de ces lignes dans la configuration d'investigation profonde où les lignes de courant retournent vers le forage en un point éloigné du jeu d'électrodes sur l'outil, par exemple une électrode de masse située sur le câble 410 de support de la sonde 400. Les courants transmis par les électrodes $A_1$, $A_2$, $A'_1$ et $A'_2$ sont commandés de façon à forcer le courant transmis par l'électrode $A_0$ plus ou moins loin dans la formation selon la profondeur d'investigation désirée.

Une antenne biplaque 401 du type décrit précédemment, par exemple en référence à la figure 6, est montée à une extrémité de ce jeu d'électrodes, en dessous de l'électrode $A'_2$. Elle est branchée sur un oscillateur fonctionnant à une fréquence de 500 kilo hertz pour transmettre à la formation un rayonnement de fréquence correspondante.

Deux antennes biplaques réceptrices 404 et 406 sont montées, la première entre les électrodes $A'_1$ et $A'_2$ et la seconde entre les électrodes $A_1$ et $A_2$. Elles sont reliées à une électronique d'acquisition et d'exploitation des signaux captés après propagation dans la formation pour fournir une mesure différentielle de conductivité. La combinaison des mesures réalisées par les récepteurs 404 et 406 permet d'obtenir une telle mesure différentielle de conductivité qui est corrigée de l'influence de la zone immédiatement au voisinage de l'outil, c'est-à-dire du trou proprement dit et de la zone superficielle autour de la paroi du trou.

Les antennes 401, 404 et 406 ont un plan de masse commun conducteur à la fréquence de 500 kilo hertz. Les électrodes de courants $A_0$, $A_1$, $A'_1$, $A_2$, $A'_2$ sont toutes reliées électriquement à ce plan de masse. Ainsi, le plan de masse est en contact électrique avec la boue en divers points sur sa longueur. Cependant, le plan de masse est aménagé à l'aide de liaisons capacitives appropriées entre ses différentes portions pour qu'à la fréquence de fonctionnement du Double Laterolog qui se situe à quelques centaines de hertz ces électrodes ne soient pas reliées électriquement par le plan de masse.

Les éléments radiants des antennes 401, 404 et 406 sont du type de l'élément 124, de la figure 6 par exemple. Ils sont plaqués sur un manchon tel que 120 d'alumine ferromagnétique dont la perméabilité magnétique est de 250 environ.

Un tel outil peut remplacer avantageusement un outil existant réalisant la même combinaison de fonctions dans lequel les éléments inducteurs de courant dans la formation sont des bobines. Afin d'éviter l'induction de courants dans des électrodes annulaires qui fausseraient les mesures effectuées à l'aide de bobines d'induction, chaque électrode de cet outil est réalisée sous la forme d'une série de boutons entourant le mandrin, isolés les uns des autres à la surface de celui-ci.

La présence d'antennes biplaques évite d'avoir à recourir à des électrodes à boutons et permet l'emploi d'électrodes massives dont les performances en profondeur d'investigation sont meilleures. En outre, les performances de l'appareil de mesure de conductivité à antennes biplaques de la figure 18 sont améliorées par rapport à l'outil à bobines sur le plan d'une meilleure résolution verticale et d'une moindre influence de l'environnement immédiat du trou en raison du caractère différentiel de la mesure et de niveaux de signaux plus élevés.

Les antennes pour diagraphie électromagnétique du type décrit sont également utilisables à l'autre extrémité du spectre de fréquence envisagé, en particulier à des fréquences supérieures à 200 MHz. Indépendamment de leur utilisation sur mandrins d'outils plongés dans des boues de forage, ces antennes, de par leur réalisation très simple, peuvent s'appliquer également à des patins pour fonctionner à des fréquences élevées. Lorsque la fréquence s'accroît, on préfère souvent mettre en œuvre des antennes montées sur des patins ayant une dimension longitudinale compatible avec une profondeur d'investigation relativement faible.

Selon une forme de réalisation, de telles antennes peuvent être réalisées sous forme de boutons (figure 14) dans lesquels une pastille de matériau diélectrique 300 est revêtue sur une de ses faces d'une couche métallique conductrice 302 formant un plan de masse et comporte une fine bande métallique 306, imprimée sur sa face opposée 304 en forme de spirale entre une extrémité centrale 308 qui peut être reliée électriquement en court-circuit avec le plan de masse 302 et une autre extrémité 310 qui est laissée libre si la longueur développée de la spirale imprimée est égale au quart de la longueur d'onde de propagation du rayonnement dans le diélectrique 300 ou à un multiple impair de celui-ci et qui est court-circuitée avec le plan de masse 302, comme dans l'exemple représenté, si la longueur développée est égale à ou à un multiple de la demi-longueur d'onde de propagation.

De tels boutons peuvent être intégrés dans un patin allongé 321 du type représenté à la figure 16 qui comporte à chacune des extrémités de sa face d'appui contre la paroi d'un forage, un bouton émetteur semblable à celui représenté sur la figure 14, respectivement 320 et 322 relié à un oscillateur de puissance très haute fréquence non représenté. Entre les deux émetteurs 320 et 322 sont montés, au voisinage de la partie centrale du patin, trois récepteurs, respectivement 322, 324 et 325 alignés dans la direction longitudinale de ce patin. Le patin 321 est monté (figure 1) de façon connue sur le mandrin de sonde 44 et articulé de façon à pouvoir être appliqué par des bras 43 contre la paroi 28 du trou de forage, soit sous l'action d'une sollicitation élastique permanente exercée par des ressorts en forme d'arc, soit par l'intermédiaire de bras dont l'ouverture est commandée à distance.

Une disposition à deux émetteurs 320 et 322, conforme à celle de la figure 16, est utilisée lorsqu'on cherche à compenser les effets d'un défaut d'application uniforme du patin contre la paroi du trou sous l'effet des irrégularités de cette dernière. Les techniques de compensation de l'influence du trou de forage (technique connue sous le nom de compensation BHC) sont bien connues pour des outils fonctionnant avec différents types de transducteurs, par exemple par US-A-3 257 639 déposé par KOKESH.

Un patin 321 tel que celui de la figure 16 fonctionnant dans un domaine de fréquence de 60 MHz à 3 gigahertz (ultra-hautes fréquences) peut être appliqué à un outil de pendagemétrie. Les mesures effectuées à partir des détecteurs 323 à 325 permettent de déceler avec une grande résolution des variations de caractéristiques diélectriques des strates de formation traversées par le forage. Suivant les techniques de pendagemétrie connues, l'ensemble des indications issues de trois et, de préférence, quatre patins analogues, comme décrit par US-A-3 423 671 déposé par A. VEZIN, appliqués autour de la paroi du trou, permet de déterminer l'inclinaison des plans de séparation des strates contiguës. Des antennes biplaques du type décrit ci-dessus permettent avantageusement d'adapter cet outil à des trous de forage remplis d'eau non salée ou de boues de forage à base de pétrole dans lesquels les outils classiques à électrodes sont inopérants. En outre, un tel outil (figure 1) équipé de telles antennes 321 permet d'obtenir, dans chaque position du patin, à la fois une mesure de conductivité et une mesure de constante diélectrique qui sont relevées pour effectuer une corrélation de ces mesures entre elles et améliorer l'exploitation de l'ensemble des données recueillies. On parvient ainsi à obtenir des représentations extrêmement fines de toutes les variations de caractéristiques géologiques, fractures et autres discontinuités des formations traversées par le forage.

L'invention peut également être appliquée à la réalisation de patins d'émission et de réception d'énergie électromagnétique à fréquence extrêmement élevée du type représenté à la figure 17 dans laquelle un patin 370 est pourvu d'une antenne d'émission 372, vers son extrémité inférieure, réalisée en technique biplaque et comportant notamment un anneau métallique 373 imprimé sur un diélectrique formant la surface du patin 370, raccordé électriquement, en un point 371, à un plan de masse placé de l'autre côté de la surface du diélectrique, et dont le périmètre est approprié pour constituer une antenne demi-onde à une haute fréquence opératoire qui peut être, par exemple, de 850 MHz. Deux récepteurs, vers l'autre extrémité du patin, sont constitués par deux barrettes 374 et 375, alignées à la surface du patin dans la direction longitudinale de celui-ci et de l'antenne 372. Ces barrettes 374 et 375 sont raccordées électriquement à une de leurs extrémités 376 et 377 au plan de masse situé de l'autre côté du diélectrique formant la surface du patin et leur longueur correspondant à un quart de longueur d'onde pour la fréquence envisagée. Ce patin permet de détecter certains paramètres de la propagation de l'énergie électromagnétique émise par l'émetteur 372 à proximité de la paroi du forage et notamment dans le gâteau de boue (mudcake) s'il en existe un.

Les antennes conformes à l'invention peuvent également être appliquées à des investigations dans l'échelle des très hautes fréquences (VHF), soit des fréquences comprises entre 200 et 500 MHz.

A cet effet, un patin 380 (figure 15) d'investigation rapprochée (patin $R_{xo}$) est constitué par une plaque isolante 380 en un matériau résistant à l'abrasion, tel qu'un composite de fibre de verre et de résine, allongée dans une direction correspondant à un déplacement longitudinal contre la paroi d'un trou de forage. Ce patin comprend une antenne émettrice inférieure 384, surmontée dans la direction longitudinale par deux antennes réceptrices 386 et 388. Sa face postérieure, c'est-à-dire non tournée vers la formation, comporte un revêtement métallique continu formant plan de masse, noyé dans une gaine protectrice à l'égard des fluides de forage dans lesquels est propre à baigner le patin. Chacune de ces antennes comprend, outre le plan de masse et la couche de diélectrique formant l'épaisseur du patin proprement dit, une lame métallique respectivement 385, 386 et 388, imprimée dans la surface antérieure 382 de ce patin selon un tracé spiralé composé de segments de droite réunis à angles vifs afin de couvrir une portion substantielle de la surface du patin. L'antenne 384 occupe la partie inférieure de celui-ci, la lame métallique imprimée 385 de cette antenne étant court-circuitée avec le plan de masse à son extrémité centrale 391 et à son extrémité périphérique 392, sa longueur étant déterminée pour constituer une antenne demi-onde. Les deux antennes réceptrices ont chacune une extrémité centrale, respectivement 393 et 394, court-circuitée avec le plan de masse sur la face postérieure du patin, tandis que l'autre extrémité de la lame métallique de ces antennes est laissée libre, la longueur de ces lames étant égale au quart de la longueur d'onde du rayonnement envisagé.

Un tel type de patin présente un intérêt particulier dans des boues à base d'eau non salée ou de pétrole où les patins à électrodes ne fonctionnent pas. Il présente en outre la particularité d'avoir une moins grande sensibilité à la résistivité de la boue dont il élimine l'influence par une mesure différentielle et permet d'obtenir une meilleure connaissance de la résistivité de l'eau de formation Rw. En effet, la mesure de la constante diélectrique à proximité de la paroi du trou de forage permet de connaître la saturation en eau Sw dans la zone appelée zone envahie où, sous l'effet de la pression de la boue de forage au contact de la paroi du trou, le filtrat de la boue a pénétré après avoir déposé les particules solides de cette dernière sur la paroi du trou (pour former le gâteau de boue) en déplaçant une partie des hydrocarbures susceptibles de se trouver dans les pores de cette formation.

Les parties métalliques des antennes sur patins représentées aux figures 14 à 17 sont avantageusement enrobées d'un revêtement protecteur isolant afin de mieux résister à la fois à l'abrasion mécanique et à la corrosion.

## Revendications

1. Outil de diagraphie pour la mesure de caractéristiques de propagation d'une onde électromagnétique dans le milieu environnant un trou de forage (20) traversant des formations géologiques, comportant une sonde (40) propre à être déplacée dans ce forage, et des moyens sur cette sonde susceptibles d'effectuer une conversion entre des signaux électriques dans la sonde et des signaux d'énergie électromagnétique se propageant dans le milieu environnant la sonde, à l'aide d'au moins une antenne pourvue d'un premier élément conducteur (102; 124; 158; 194; 250; 260; 306) allongé et suivant un trajet curviligne parallèle à une surface donnée définie par un second élément conducteur (105; 126; 154; 193; 254; 264; 302) disposé en regard et à distance dudit premier élément, les premier et second éléments étant séparés par un milieu non conducteur (100; 120; 192; 152; 263; 300) de l'électricité et reliés électriquement l'un à l'autre à une extrémité de la longueur utile du premier élément, caractérisé en ce que ladite antenne est du type biplaque et comporte un corps central (100; 120; 192; 152; 263; 300) constitué d'un matériau non conducteur correspondant audit milieu non conducteur, ledit corps central comportant une première surface dirigée vers la paroi du trou de forage (20) et une deuxième surface dirigée vers le centre du trou de forage, ledit premier élément (102; 124; 158; 194; 250; 260; 306) étant disposé sur la première surface et ledit deuxième élément (105; 126; 154; 193; 254; 264; 302) étant disposé sur la deuxième surface.

2. Outil de diagraphie selon la revendication 1, caractérisé en ce que le corps central (100; 120; 192; 152; 263; 300) est en matériau diélectrique.

3. Outil de diagraphie selon la revendication 1, caractérisé en ce que le corps central (100; 120; 192; 152; 263; 300) est en matériau de forte perméabilité magnétique.

4. Outil de diagraphie selon l'une des revendications 1 à 3, caractérisé en ce que la première et deuxième surfaces sont sensiblement cylindriques et l'enveloppe extérieure de la sonde constitue ledit premier élément (124; 194; 158), celui-ci ayant la forme d'une portion d'hélice.

5. Outil de diagraphie selon la revendication 4, caractérisé en ce que le corps central (120; 152; 192) est en forme de segment annulaire cylindrique creux dont le diamètre interne est sensiblement équivalent au diamètre extérieur de la sonde.

6. Outil de diagraphie selon l'une des revendications 1 à 3, caractérisé en ce que l'antenne constitue au moins en partie, un ensemble de contact, tel qu'un patin (321; 370; 380), susceptible d'être écarté de la sonde pour venir en contact avec la paroi du trou de forage (20).

7. Outil de diagraphie selon l'une des revendications précédentes, caractérisé en ce que la longueur utile du premier élément (124; 158; 194; 102; 250; 260; 306) est accordée en fonction de la longueur d'onde de propagation de ladite énergie électromagnétique dans le matériau non conducteur.

8. Outil de diagraphie selon l'une des revendications précédentes, caractérisé en ce que l'extrémité du premier élément (124; 158; 194; 102; 250; 260; 306) est reliée électriquement au deuxième élément conducteur par l'intermédiaire d'une self-inductance (258).

9. Outil de diagraphie selon l'une des revendications précédentes, caractérisé en ce que la position du point d'entrée électrique (110) de l'antenne est choisie le long du premier élément de façon à réaliser une adaptation d'impédance d'entrée de cette antenne.

10. Procédé de diagraphie pour la mesure des caractéristiques du milieu environnant un trou de forage traversant des formations géologiques, par descente d'une sonde dans ce forage, ladite sonde faisant partie d'un outil de diagraphie, procédé comportant les étapes suivantes:
— on descend la sonde comportant une antenne émettrice (T) et au moins une antenne réceptrice (R1–R4) et
— on enregistre les signaux recueillis par l'antenne réceptrice pendant l'excitation de l'antenne émettrice au fur et à mesure de la descente, caractérisé en ce que l'on utilise comme outil de diagraphie un outil selon l'une des revendications 1 à 9.

11. Procédé selon la revendication 10, caractérisé en ce qu'on utilise comme sonde une sonde comportant au moins une paire d'antennes réceptrices (R1, R2; R3, R4).

12. Procédé selon la revendication 11, caractérisé en ce qu'on utilise comme sonde une sonde comportant deux paires d'antennes réceptrices (R1, R2; R3, R4) dont les distances longitudinales par rapport à l'antenne d'émission sont choisies (Dn, Df) pour les rendre sensibles à l'atténuation et au déphasage subis par les signaux électromagnétiques, respectivement.

**Claims**

1. Logging tool for measuring the propagation characteristics of an electromagnetic wave in the medium surrounding a borehole (20) going through geological formations, comprising a sonde (40) capable of being moved in this borehole, and means on this sonde capable of carrying out a conversion between electric signals in the sonde and electromagnetic energy signals propagating in the medium surrounding said sonde thanks to at least one antenna provided with a first electricity conducting element (102; 124; 158; 194; 250; 260; 306) being elongated and following a curvilinear path parallel to a given surface defined by a second conducting element (105; 126; 154; 193; 254; 264; 302) placed opposite and at a distance from said first element, the first and second elements being separated by a medium not conducting electricity (100; 120; 192; 152; 263; 300) and being connected electrically to each other at one end of the useful length of the first element, characterized in that said antenna is of the bi-plate type and comprises a central body (100; 120; 192; 152; 263; 300) composed of non conducting material corresponding to said non conducting medium, said central body comprising a first surface directed towards the borehole wall (20) and a second surface directed towards the borehole center, said first element (102; 124; 158; 194; 250; 260; 306) being disposed on the first surface and said second element (105; 126; 154; 193; 254; 264; 302) being disposed on the second surface.

2. Logging tool according to claim 1, characterized in that the central body (100; 120; 192; 152; 263; 300) is made of dielectric material.

3. Logging tool according to claim 1, characterized in that the central body (100, 120; 192; 152; 263; 300) is made of material with heavy magnetic permeability.

4. Logging tool according to any of claims 1 to 3, characterized in that the first and second surfaces are approximately cylindrical and the exterior side of the sonde constitutes said first element (124; 194; 158), the latter being section of helix shaped.

5. Logging tool according to claim 4, characterized in that the central body (120; 152; 192) is a hollow annular cylindrical segment shaped, the internal diameter of said segment being approximately equivalent to the external diameter of the sonde.

6. Logging tool according to any of claims 1 to 3, characterized in that the antenna constitutes, at least partly, a contact unity, such as a pad (321, 370, 380) liable to be moved away from the sonde so as to come in contact with the wall of the borehole (20).

7. Logging tool according to any of the preceding claims, characterized in that the useful length of the first element (124; 158; 194; 102; 250; 260; 306) is tuned according to the propagation wavelength of said electromagnetic energy in the nonconducting material.

8. Logging tool according to any of the preceding claims, characterized in that the end of the first element (124; 158; 194; 102; 250; 260; 306) is electrically linked to the second conducting element thanks to a self-inductance (258).

9. Tool according to any of the preceding claims, characterized in that the position of the electrical input point (110) of the antenna is chosen along said first element so as to realise an input impedance matching of this antenna.

10. Logging method for measuring characteristics of a medium surrounding a borehole going through geological formations, by moving a sonde (40) in this borehole, said sonde being included in a logging tool, method including the following steps:
   — lowering the sonde provided with a transmitting antenna (T) and at least a receiving antenna (R1–R4);
   — recording the signals received by the receiving antenna during excitation of the transmitting antenna as the tool is lowered;
   characterized in that one makes use, as a logging tool, of the logging tool according to any of claims 1 to 9.

11. Method according to claim 10, characterized in that one makes use, as a sonde, of a sonde provided with at least a pair of receiving antenna (R1, R2; R3, R4).

12. Method according to claim 11, characterized in that one makes use, as a sonde, of a sonde including two pairs of receiving antenna (R1, R2; R3, R4), the longitudinal distances of which, in relation to the transmitting antenna, are chosen (Dn, Dg) so as to make them sensitive respectively to the attenuation and to the phase displacement, undergone by the electromagnetic signals.

**Patentansprüche**

1. Diagraphiegerät für die Messung von Kennwerten der Ausbreitung einer elektromagnetischen Welle in dem ein geologische Formationen durchteufendes Bohrloch (20) umgebenden Milieu, mit einer in dem Bohrloch verlagerbaren eigentlichen Sonde (40) und Mitteln auf dieser Sonde, ausgebildet zum Bewirken einer Umsetzung zwischen elektrischen Signalen in der Sonde und elektromagnetischen Energiesignalen, die sich in dem die Sonde umgebenden Milieu ausbreiten mit Hilfe mindestens einer Antenne, versehen mit einem ersten langgestreckten leitenden Element (102; 124; 158; 194; 250; 260; 306) und längs einer gekrümmten Bahn parallel zu einer ebenen Oberfläche, definiert durch ein zweites leitendes Element (105; 126; 154; 193; 254; 264; 302), angeordnet gegenüber und im Abstand von dem genannten ersten Element, wobei das erste und zweite Element voneinander durch ein elektrisch nichtleitendes Milieu (100; 120; 192; 152; 263; 300) getrennt sind und elektrisch miteinander an einem Ende der nutzbaren Länge des ersten Elements verbunden sind, dadurch gekennzeichnet, dass die genannte Antenne vom Doppelplattentyp ist und einen Zentralkörper (100; 120; 192; 152; 263; 300) umfasst, gebildet von einem nichtleitenden Material entsprechend dem genannten nichtleitenden Milieu, wobei der genannte Zentralkörper eine erste der Wandung des Bohrlochs (20) zugekehrte Oberfläche und eine zweite dem Bohrlochzentrum zugekehrte Oberfläche aufweist, und wobei das erste Element (102; 124; 158; 194; 250; 260; 306) auf der ersten Oberfläche und das genannte zweite Element (105; 126; 154; 193; 257; 264; 302) auf der zweiten Oberfläche angeordnet sind.

2. Diagraphiegerät nach Anspruch 1, dadurch gekennzeichnet, dass der Zentralkörper (100; 120; 192; 152; 263; 300) aus einem dielektrischen Material ist.

3. Diagraphiegerät nach Anspruch 1, dadurch gekennzeichnet, dass der Zentralkörper (100; 120; 192; 152; 263; 300) aus einem Material hoher magnetischer Permeabilität ist.

4. Diagraphiegerät nach einem der Ansprüche 1 bis 3, dadurch gekennzeichnet, dass die erste und die zweite Oberfläche im wesentlichen zylindrisch sind und der äussere Mantel der Sonde das genannte erste Element (124; 194; 158) bildet, welches die Form eines Schraubenlinienabschnitts hat.

5. Diagraphiegerät nach Anspruch 4, dadurch gekennzeichnet, dass der Zentralkörper (120; 152; 192) die Form eines zylindrischen hohlen Ringsegments hat, dessen Innendurchmesser im wesentlichen äquivalent dem äusseren Durchmesser der Sonde ist.

6. Diagraphiegerät nach einem der Ansprüche 1 bis 3, dadurch gekennzeichnet, dass die Antenne mindestens teilweise eine Kontaktbaugruppe bildet, wie einen Gleitschuh (321; 370, 380), ausgebildet zum Ausgefahrenwerden aus der Sonde zur Kontaktnahme mit der Wandung des Bohrlochs (20).

7. Diagraphiegerät nach einem der vorangehenden Ansprüche, dadurch gekennzeichnet, dass die verwertbare Länge des ersten Elements (124; 158; 194; 102; 250; 260; 306) in Übereinstimmung ist in Funktion der Ausbreitungswellenlänge der genannten elektromagnetischen Energie in dem nichtleitenden Material.

8. Diagraphiegerät nach einem der vorangehenden Ansprüche, dadurch gekennzeichnet, dass das Ende des ersten Elements (124; 158; 194; 102; 250; 260; 306) elektrisch verbunden ist mit dem zweiten leitenden Element über eine Selbstinduktivität (258).

9. Diagraphiegerät nach einem der vorangehenden Ansprüche, dadurch gekennzeichnet, dass die Position des Punktes der elektrischen Einspeisung (110) der Antenne längs des ersten Elements gewählt ist, so dass eine Anpassung der Eingangsimpedanz dieser Antenne realisiert wird.

10. Diagraphieverfahren für die Messung der Kennwerte des ein geologische Formationen durchteufendes Bohrloch umgebenden Milieus durch Absenken einer Sonde in dieses Bohrloch, welche Sonde einen Teil eines Diagraphiegerätes bildet, welches Verfahren die folgenden Schritte umfasst:

– man senkt die eine Sendeantenne (T) und mindestens eine Empfangsantenne (R1–R4) umfassende Sonde ab und

– man registriert die Signale, empfangen von der Empfangsantenne während der Erregung der Sendeantenne im Verlauf des Absenkens, dadurch gekennzeichnet, dass man als Diagraphiegerät ein Gerät gemäss einem der Ansprüche 1 bis 9 verwendet.

11. Verfahren nach Anspruch 10, dadurch gekennzeichnet, dass man als Sonde eine Sonde mit mindestens einem Empfangsantennenpaar (R1, R2; R3, R4) verwendet.

12. Verfahren nach Anspruch 11, dadurch gekennzeichnet, dass man als Sonde eine Sonde verwendet mit zwei Empfangsantennenpaaren (R1, R2; R3, R4), deren Längsabstände bezüglich der Sendeantenne gewählt sind (Dn, Df), um sie empfindlich zu machen bezüglich der Dämpfung bzw. der Phasenverschiebung, welche die elektromagnetischen Signale erfahren.

# Fig.1

# Fig. 2

# Fig. 3

# Fig.4

# Fig.5

**Fig.6**

**Fig. 9**

**Fig. 12**

**Fig. 13**

## Fig. 7

## Fig. 8

Fig.10

Fig.11a

Fig.11b

Fig.14

304 306 310

300

308

302

Fig.15

380

394 387

388

393

386

387

382

385

391

384

392

Fig.16

322

325

324

323

321

320

Fig.17

375 370

377

376

374

371

373

372

**Fig. 18**

410

400

412

$A_2$

412

406

$A_1$

$M_2$

$M_1$

$A_0$

$M'_1$

$M'_2$

412

$A'_1$

412

404

$A'_2$

401